# EUROPÄISCHE PATENTSCHRIFT

(11) **EP 2 340 205 B1**
(45) Veröffentlichungstag und Bekanntmachung des Hinweises auf die Patenterteilung: **23.01.2013**
(21) Anmeldenummer: 09778821.0
(22) Anmeldetag: 05.10.2009
(51) Int. Cl.: B64G 1/40, F02K 9/60, F17C 1/16

(54) **BEHÄLTER ZUM AUFNEHMEN UND SPEICHERN VON FLÜSSIGKEITEN UND VISKOSEN STOFFEN UND VERFAHREN ZU DESSEN HERSTELLUNG SOWIE DESSEN VERWENDUNG**
CONTAINER FOR RECEIVING AND STORING LIQUIDS AND VISCOUS SUBSTANCES AND METHOD FOR THE PRODUCTION AND USE THEREOF
RÉCIPIENT DESTINÉ À CONTENIR ET À STOCKER DES LIQUIDES ET DES MATIÈRES VISQUEUSES, SON PROCÉDÉ DE PRODUCTION ET SON UTILISATION

(30) Priorität: 04.10.2008 DE 102008050404
(43) Veröffentlichungstag der Anmeldung: 06.07.2011
(73) Patentinhaber: MT Aerospace AG, 86153 Augsburg (DE)
(72) Erfinder: SZELINSKI, Bernd, 86453 Dasing (DE); ZELL, Daniel, 86707 Kühlenthal (DE); RADTKE, Wulf, 82152 Planegg (DE); LANGE, Harald, 86159 Augsburg (DE); VOLLMAR, Thomas, 86477 Adelsried (DE); LARCH, Sascha, 86167 Augsburg (DE); WEILAND, Stefan, 53498 Waldorf (DE); WENZEL, Peter, 82205 Gilching (DE); CAROW, Sönke, 86199 Augsburg (DE)
(74) Vertreter: Grape & Schwarzensteiner
(86) Internationale Anmeldenummer: PCT/EP2009/007109
(87) Internationale Veröffentlichungsnummer: WO 2010/037561

(56) Entgegenhaltungen:
- US-A- 2 092 490
- US-A- 5 085 343
- US-A- 5 865 923
- US-A1- 2004 118 855

## Beschreibung

Die vorliegende Erfindung betrifft einen Behälter zum Aufnehmen und Speichern von kryogenen Fluiden, insbesondere von kryogenen Flüssigkeiten und viskosen Stoffen, und Verfahren zu dessen Herstellung sowie dessen Verwendung.

Heutige Trägerraketen erzielen durch das Stufungsprinzip eine Verbesserung ihrer Nutzlastkapazität. Die Nutzlastkapazität wird dabei in besonders hohem Maße neben der Leistungsfähigkeit der Oberstufe der Trägerrakete durch die Strukturmasse beeinflusst. Um eine effiziente Konzipierung der Oberstufe zu gewährleisten, werden weitreichende Anstrengungen unternommen, um die Strukturmasse, bestimmt durch funktionale Komponenten, wie zum Beispiel Isolierung, Tankwände etc., möglichst geringzuhalten.

Im Mittelpunkt einer Auslegung der Oberstufe steht unabhängig von dem Missionsprofil grundsätzlich immer eine masseeffiziente Konstruktion. Die Strukturbauteile müssen bei möglichst geringem Gewicht die geforderte Funktion unter den herrschenden mechanischen, thermischen und chemischen Lasten erfüllen. Weiterhin ist der für die Oberstufe verfügbare Bauraum durch die Architektur der Trägerrakete selbst beschränkt.

Im Falle von lang andauernden Frei-Flugphasen, wie sie bei Geotransfer-Orbit (GTO)- oder interplanetaren Missionen erforderlich sind, treten thermale Anforderungen verstärkt in den Vordergrund der Oberstufentechnologie.

Speziell die Funktion einer Speicherung der als Treibstoff/Oxidator-Gemisch verwendeten kryogenen Fluiden Sauerstoff/Wasserstoff führt zu erheblichen mechanischen und thermischen Belastungen und Anforderungen.

Weiterhin spielt die thermale Entkopplung der gespeicherten Fluide durch eine leichte, effiziente und zuverlässige Isolation eine wesentliche Rolle. Ab dem Zeitpunkt der Betankung einer Oberstufe ist aufgrund der unterschiedlichen Temperatur von zum Beispiel Sauerstoff (- 90 K) und Wasserstoff (- 24 K) eine Interaktion zwischen dem wärmeren Fluid Sauerstoff und dem kälteren Fluid Wasserstoff festzustellen. Infolgedessen kommt es zu einer erhöhten Verdampfung und damit zu einem verstärkten Verlust von Wasserstoff. Dieser Effekt hält während der gesamten Flugphase an. Besonders bei langen Frei-Flugphasen resultiert der Verlust von Wasserstoff in einer deutlichen Reduktion des Treibstoffvorrats bzw. der Nutzlastkapazität.

Derartige Behälter sind allgemein bekannt. So ist beispielsweise in der US-A 5 085 343 ein Behälter als Tank für ein Raumfahrzeug beschrieben. Der Behälter ist aus einem Mantel und mindestens einer Trennwand, welche den Innenraum des Behälters in wenigstens zwei einander benachbarte Kammern zum getrennten Aufnehmen und Speichern von Sauerstoff und Wasserstoff unterteilt, gebildet. Die Trennwand, die einen gemeinsamen Tankboden darstellt, umfasst zwei jeweils einer der zwei einander benachbarten Kammern zugewandte Deckschichten mit einer zwischengeordneten Wabenstruktur. Die Wabenstruktur weist eine zelluläre Konfiguration auf und besteht aus mit Fasern imprägnierten Kunststoffen oder einer Aluminiumlegierung. Da eine Befestigung der Wabenstruktur an den zwei Deckschichten erhebliche Nachteile mit sich bringt, wie ausführlich erläutert, ist die Wabenstruktur ausschließlich über eine zusätzliche Deckschicht aus faserverstärktem Laminat an einer der zwei Deckschichten angebracht. Zwischen dieser zusätzlichen Deckschicht und der anderen der beiden Deckschichten ist mithin konstruktiv ein Spalt zum Ausgleich von Fertigungsungenauigkeiten und von Verformungen infolge von Druckbeaufschlagungen vorgesehen. Zudem soll der Spalt, der mit Inertgas befüllt oder an den ein Vakuum angelegt ist, einer Übertragung von Wärme entgegenwirken. In der Praxis hat sich jedoch herausgestellt, dass der bekannte Behälter den mechanischen und thermischen Anforderungen aufgrund dessen konstruktiver Ausgestaltung nicht, zumindest nicht hinreichend genügt. Einerseits ist eine Übertragung von mechanischen Kräften und/oder Momenten aufgrund des Spaltes zwischen der zusätzlichen Deckschicht aus faserverstärktem Laminat und der anderen der zwei Deckschichten vollständig ausgeschlossen. Andererseits ist die wärmeisolierende oder einen Wärmefluss reduzierende Wirkung aufgrund der Größe des gebildeten Hohlraumes infolge der Befestigung der zusätzlichen Deckschicht aus faserverstärktem Laminat an der einen der zwei Deckschichten im Bereich des Äquators der einen Deckschicht erheblich vermindert. Durch die zusätzliche Deckschicht aus faserverstärktem Laminat ergeben sich darüber hinaus wesentliche Nachteile hinsichtlich einer Gewichtszunahme und einer arbeits- sowie kostenintensiven Herstellung.

Der vorliegenden Erfindung liegt daher die Aufgabe zugrunde, einen Behälter zum Aufnehmen und Speichern von Flüssigkeiten und viskosen Stoffen, insbesondere von kryogenen Fluiden, zur Verfügung zu stellen, mit welchem sich die obigen Nachteile verhindern lassen, welcher mithin konstruktiv besonders einfach, zugleich kompakt und stabil sowie sehr leichtbauend ist, eine Übertragung hoher Kräfte und Momente ermöglicht, damit einhergehend eine hohe Festigkeit und Steifigkeit aufweist, für eine gleichermaßen effiziente und leichtbauende Wärmeisolierung sorgt und in der Herstellung ausgesprochen kostengünstig ist, sowie ein Verfahren zu dessen Herstellung sowie dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Behälters zum Aufnehmen und Speichern von kryogenen Fluiden, insbesondere von kryogenen Flüssigkeiten und viskosen Stoffen, mit einem Mantel und mindestens einer Trennwand, welche den Innenraum des Behälters in wenigstens zwei einander benachbarte Kammern unterteilt, wobei die mindestens eine Trennwand in Sandwichbauweise ausgebildet ist und zwei jeweils einer der wenigstens zwei einander benachbarten Kammern zugewandte Deckschichten sowie eine in einem Zwischenraum zwischen den zwei Deckschichten angeordnete, mechanische Kräfte und/oder Momente übertragende und wärmeisolierende oder einen Wärmefluss reduzierende Zwischenschicht aus Polymer-Schaum umfasst, wobei die mechanische Kräfte und/oder Momente übertragende und wärmeisolierende oder einen Wärmefluss reduzierende Zwischenschicht aus Polymer-Schaum den Zwischenraum zwischen den zwei Deckschichten vollständig oder im Wesentlichen vollständig ausfüllt und mit den zwei Deckschichten haftend verbunden ist, wird eine besonders einfache, zudem kompakte und stabile Bauweise des Behälters von verhältnismäßig geringem Gewicht erreicht. Darüber hinaus ist eine Kraft- und/oder Momenten-übertragung über die Trennwand des erfindungsgemäßen Behälters ermöglicht. Zugleich weist der erfindungsgemäße Behälter eine hohe Festigkeit und Steifigkeit auf. Insbesondere ist der erfindungsgemäße Behälter gegenüber hohem Innen- und Außendruck unempfindlich. Demnach sind plastische Verformungen des Behälters unter einem spezifizierten maximalen Betriebsinnendruck ausgeschlossen. Zudem ist der erfindungsgemäße Behälter gegen Beulen unempfindlich. Gleichermaßen weist der erfindungsgemäße Behälter den zusätzlichen wesentlichen Vorteil auf, eine effiziente und leichtbauende Wärmeisolierung oder zumindest eine ausreichende Reduzierung des Wärmeflusses infolge des unterschiedlichen Temperaturgradienten durch die in den wenigstens zwei einander benachbarten Kammern aufgenommenen und gespeicherten Fluide sicherzustellen. Durch die vollständige oder im Wesentlichen vollständige Ausfüllung ist ein umfassender Kontakt zwischen der Zwischenschicht und den zwei Deckschichten der Trennwand ermöglicht. Dadurch lassen sich mechanische Kräfte und/oder Momente zwischen den zwei Deckschichten und zwischen den zwei benachbarten Kammern des Behälters beliebig übertragen. Dadurch ist auch eine zuverlässige Isolation der zwei einander benachbarten Kammern, welche Fluide unterschiedlicher Temperatur aufnehmen und speichern, sichergestellt. Schließlich gestaltet sich die Herstellung des erfindungsgemäßen Behälters einfach und wenig arbeitsintensiv und ist somit ausgesprochen kostengünstig.

Im Ergebnis zeichnet sich der Behälter nach der Erfindung, welcher die Sandwichbauweise nutzt, durch eine Vielzahl von Vorteilen aus. Eine gemeinsame Trennwand zwischen zwei einander benachbarten Kammern des Behälters, welche Sauerstoff bzw. Wasserstoff aufnehmen und speichern, führt, im Vergleich zu zwei getrennten Behältern mit zwei gesonderten Trennwänden, zu einer Massenreduktion. Gleichzeitig werden die Gesamtlänge des Behälters und damit der erforderliche Bauraum verringert. Die Sandwichbauweise ermöglicht eine masseeffiziente Konstruktion bei insbesondere beulkritischen, aber ebenso festigkeitskritischen Bauteilen. Letztlich kann durch die Sandwichbauweise eine optimale Isolationswirkung erzielt werden. Durch die benachbarte Anordnung der zwei Kammern, die mit Sauerstoff bzw. Wasserstoff befüllt sind, kommt es im Allgemeinen zu einem Wärmefluss und somit zu einem sogenannten Abdampfen von Wasserstoff. Um die abgedampfte Masse von Wasserstoff zu minimieren, reduziert der erfindungsgemäße Behälter diesen Wärmefluss erheblich, wenn nicht vollständig durch eine geringe Wärmeleitung der gemeinsamen Trennwand insgesamt. Eine zusätzliche Isolationsschicht für die gemeinsame Trennwand (etwa eine sogenannte "Nass"-Isolation auf bzw. an der Deckschicht der Kammer, welche den Wasserstoff aufnimmt und speichert) ist überflüssig. Somit erfüllt die gemeinsame Trennwand in Sandwichbauweise die mechanischen und thermischen Anforderungen gleichermaßen. Die benötigte strukturmechanische und thermische Funktionalität sind in einem Bauteil vereint.

Weitere vorteilhafte Einzelheiten des erfindungsgemäßen Behälters sind in den Ansprüchen 2 bis 11 beschrieben.

Von großer Bedeutung für eine ausgesprochen einfache und damit kostengünstige Bauweise zum einen und eine hohe Funktionszuverlässigkeit in vor allem mechanischer, aber auch thermischer, Hinsicht zum anderen sind die Merkmale des Anspruchs 2. Danach weist die mechanische Kräfte und/oder Momente übertragende und wärmeisolierende oder einen Wärmefluss reduzierende Zwischenschicht aus Polymer-Schaum eine von der Mitte hin zu einem rand- bzw. umfangsseitigen Bereich der zwei Deckschichten kontinuierlich zunehmende Dicke auf. Durch eine solche "Aufweitung" der Dicke bzw. Höhe der Zwischenschicht aus Polymer-Schaum von der Mitte, d.h. vom Pol, hin zu einem rand- bzw. umfangsseitigen Bereich, d.h. zum Äquator, lässt sich das Ableiten von Schubkräften erheblich verbessern. Unter dem Begriff "Aufweitung" ist ein vom Pol hin zum Äquator zunehmender Querschnitt der Zwischenschicht aus Polymer-Schaum zu verstehen. Beispielsweise kann die Zwischenschicht im Querschnitt am Pol eine Dicke bzw. Höhe von ca. 40 mm und am Äquator von ca. 100 mm aufweisen.

Von gleichermaßen großem Interesse sind die konstruktiven Maßnahmen des Anspruchs 3, um eine ausgesprochen einfache und damit kostengünstige Bauweise und eine hohe Funktionszuverlässigkeit in mechanischer und thermischer Hinsicht zu ermöglichen. Demzufolge ist die mechanische Kräfte und/oder Momente übertragende und wärmeisolierende oder einen Wärmefluss reduzierende Zwischenschicht aus Polymer-Schaum im rand- bzw. umfangsseitigen Bereich der zwei Deckschichten mit einer Ausnehmung oder Aussparung und zwei durch die Ausnehmung oder Aussparung gebildeten Übergangsbereichen von abnehmender Form und/oder Dicke, die jeweils an einer der Deckschichten befestigt sind, versehen. Da insbesondere bei einem etwa halbkugelförmigen Sandwichtragwerk die Schubspannung im Bereich des Äquators kumuliert, kann eine Einleitung des Kraft- bzw. Schubflusses durch einen sanften Übergang der Zwischenschicht aus Polymer-Schaum zu den zwei Deckschichten hin maßgeblich verbessert werden. Des Weiteren wird der nicht zu vermeidende Steifigkeitssprung beim Übergang zwischen der Zwischenschicht aus Polymer-Schaum, Kleber und Deckschicht durch den sanften Auslauf der Zwischenschicht aus Polymer-Schaum deutlich gemindert. Diese kontinuierliche Krafteinleitung hat den weiteren Vorteil, dass ein Abschäleffekt (peeling) in der Klebefuge, der die Deckschichten von der Zwischenschicht abzulösen versucht, ebenfalls abgeschwächt wird bzw. gänzlich vermieden wird.

In diesem Zusammenhang ist die Zwischenschicht mit Materialeigenschaften zur Übertragung mechanischer Kräfte und/oder Momente und zur Wärmeisolierung oder Reduzierung eines Wärmeflusses nach Anspruch 4 vorteilhafterweise aus einem offen-oder geschlossenporigen Polymer-Schaum gebildet. Ein offen-oder geschlossenporiger Polymer-Schaum kann bei geringer Strukturmasse sowohl hohe mechanische Lasten übertragen als auch sehr gute Isolationseigenschaften aufweisen.

Um den Wärmefluss, welcher über die Oberfläche übertragen wird, noch zusätzlich effizient zu reduzieren, ist die mechanische Kräfte und/oder Momente übertragende und wärmeisolierende oder einen Wärmefluss reduzierende Zwischenschicht in ganz vorteilhafter Weise aus Polyurethan-Schaum gebildet.

In weiterer Ausgestaltung der Erfindung ist die mechanische Kräfte und/oder Momente übertragende und wärmeisolierende oder einen Wärmefluss reduzierende Zwischenschicht nach Anspruch 5 mit den zwei Deckschichten mittels eines Klebstoffs, insbesondere eines aufschäumenden Klebstoffs, vorzugsweise eines pastösen Klebers, Filmklebers oder Epoxidharzes, haftend verbunden.

In vorteilhafter Weise umfasst die Trennwand nach Anspruch 6 ein Verbindungselement, das separat ausgebildet ist und die zwei jeweils einer der wenigstens zwei einander benachbarten Kammern zugewandte Deckschichten miteinander verbindet. Ein solches separates Verbindungselement kann variabel und individuell, d.h. unabhängig von Konstruktionsvorgaben und Verfahrensparametern des Behälters insgesamt, an beliebige mechanische Lastsituationen angepasst und als Thermalsperre auf bestimmte thermische Lastsituationen abgestimmt werden. Vorzugsweise liegt es im Rahmen der Erfindung, dass das Verbindungselement der Trennwand den Zwischenraum zwischen den zwei Deckschichten rand- bzw. umfangsseitig begrenzt.

Des Weiteren ist erfindungsgemäß vorgesehen, dass das Verbindungselement der Trennwand nach Anspruch 7 an den zwei Deckschichten der Trennwand mittelbar über zwei etwa Y-förmige, insbesondere steife oder mit Versteifungsrippen ausgesteifte, und an dem Mantel des Behälters anbringbare Ringelemente befestigt ist.

Alternativ dazu ist es ebenso denkbar, das Verbindungselement der Trennwand an den zwei Deckschichten der Trennwand unmittelbar zu befestigen.

Um eine Beschädigung des Polymer-Schaumes zum Beispiel durch Eintrag von Hitze beim Schweißen zu vermeiden, ist das Verbindungselement der Trennwand an den zwei etwa Y-förmigen Ringelementen oder den zwei Deckschichten der Trennwand vorzugsweise über eine Bolzenverbindung, wie mittels Blindnieten oder dergleichen, ohne oder mit Zwischenanordnung von Dopplerelementen, befestigt. Dopplerelemente, wie zum Beispiel Doppler-Bleche, reduzieren die Belastung der Randnieten an einer Nahtstelle von zwei benachbarten Verbindungselementen um ca. 20 bis 30 %. Dadurch lässt sich eine Krafthomogenisierung bzw. Kraftverteilung und somit Belastungsreduktion der Randnieten. Die hohen Kraft- und Schubspannungen auf die zur Mitte hin angeordneten Nieten aufgeteilt. Einem Versagen der Randnieten und einem Übertragen der Last auf benachbarte Nieten mit anschließender Überlastung auch dieser Nieten lässt sich somit entgegenwirken.

Das Verbindungselement der Trennwand ist in seinen Abmessungen an den Abstand zwischen den zwei Deckschichten und die Dicke der Zwischenschicht in dem Zwischenraum zwischen den zwei Deckschichten angepasst. Auf diese Weise lässt sich ohne großen Aufwand auf bestimmte räumliche, konstruktive oder sonstigen sachlichen Gegebenheiten, Voraussetzungen und Vorgaben individuell reagieren und damit eine vielseitige Verwendung des erfindungsgemäßen Behälters sicherstellen.

Von besonders großem Interesse sind weiterhin die konstruktiven Maßnahmen des Anspruchs 8, nachdem eine Kraft- und/oder Momentenübertragung und ein Wärmeaustauch nicht ausschließlich über die Oberflächen einer gemeinsamen Trennwand, sondern auch über die außenliegende Oberfläche des Mantels selbst erfolgt/erfolgen. Danach ist das Verbindungselement der Trennwand aus einem hochfesten Material mit niedriger Wärmeleitfähigkeit gebildet. Das verwendete Material des Verbindungselementes muss zum einen hohe Festigkeiten zur Übertragung von mechanischen Lasten und zum anderen parallel einen niedrigen Wärmeleitungskoeffizienten aufweisen. Der Wärmefluss zwischen den zwei Deckschichten lässt sich somit drastisch verringern.

Zweckmäßigerweise ist das Verbindungselement der Trennwand aus Metall, insbesondere aus Stahl, Edelstahl, Aluminium, Titan, einer Legierung daraus und/oder einer Kombination daraus gebildet ist. Der Anteil des Wärmeflusses, welcher über das Verbindungselement übertragen wird, kann durch eine geeignete Wahl des verwendeten Materials erheblich reduziert werden.

Darüber hinaus liegt es im Rahmen der Erfindung, dass das Verbindungselement der Trennwand nach Anspruch 9 außenseitig durch einen Überzug, insbesondere eine Folie aus Metall, gesondert abgedichtet ist.

Als zweckmäßig hat sich erwiesen, dass die zwei jeweils einer der wenigstens zwei einander benachbarten Kammern zugewandten Deckschichten der Trennwand rotationssymmetrisch und/oder nicht rotationssymmetrisch bzw. schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildet sind.

Weiterhin können die zwei jeweils einer der wenigstens zwei einander benachbarten Kammern zugewandten Deckschichten der Trennwand eine zueinander im Wesentlichen identische Form aufweisen. Für den Fall einer insbesondere halbkugelförmigen oder damit vergleichbaren Querschnittsform der zwei Deckschichten kumuliert jedoch die Schubspannung im Bereich von deren Äquator, da die gesamte Belastung des Domes in die zwei etwa Y-förmigen Ringelemente eingeleitet wird. Um die Einleitung des Kraft- bzw. Schubflusses in die Ringstruktur maßgeblich zu verbessern, weisen die zwei jeweils einer der wenigstens zwei einander benachbarten Kammern zugewandten Deckschichten der Trennwand alternativ dazu und ganz bevorzugt eine voneinander abweichende Form auf, derart, dass die Deckschichten vom Pol zum Äquator hin voneinander zunehmend beabstandet sind. Eine solche Aufweitung vom Pol hin zum Äquator dient mithin einem verbesserten Abtragen von Schubkräften in die etwa Y-förmigen Ringelemente.

Von besonderem Vorteil sind die Merkmale des Anspruchs 10, dass nämlich die zwei jeweils einer der wenigstens zwei einander benachbarten Kammern zugewandten Deckschichten der Trennwand durch Spinformen hergestellt sind.

Nach Anspruch 11 ist/sind der Behälter, insbesondere der Mantel und die etwa Y-förmigen Ringelemente des Behälters, leichtbauend ausgebildet.

Des Weiteren ist/sind der Behälter, insbesondere der Mantel und die etwa Y-förmigen Ringelemente des Behälters, vorzugsweise aus Metall, insbesondere aus Stahl, Edelstahl, Aluminium, Titan, einer Legierung daraus und/oder einer Kombination daraus gebildet.

Diese Aufgabe wird weiterhin in verfahrenstechnischer Hinsicht auf überraschend einfache Weise durch die Merkmale der Ansprüche 12 und 13 gelöst.

Durch die Ausgestaltung der erfindungsgemäßen Verfahren zum Herstellen eines Behälters zum Aufnehmen und Speichern von kryogenen Fluiden, insbesondere von kryogenen Flüssigkeiten und viskosen Stoffen, mit einem Mantel und mindestens einer Trennwand, welche den Innenraum des Behälters in wenigstens zwei einander benachbarte Kammern unterteilt, umfassend folgende Schritte:
a) Herstellen von zwei jeweils einer der wenigstens zwei einander benachbarten Kammern zugewandten, schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildeten Deckschichten der Trennwand,
b) Ausrichten der zwei Deckschichten der Trennwand zueinander und mit deren konkaven Oberflächen nach oben,
c) Fixieren der zwei Deckschichten der Trennwand zueinander,
d) Einbringen einer mechanische Kräfte und/oder Momente übertragenden und wärmeisolierenden oder einen Wärmefluss reduzierenden Zwischenschicht aus Polymer-Schaum in einen Zwischenraum zwischen den zwei Deckschichten der Trennwand mittels einer Befüllungs- oder Dosierlanze, und
e) Aushärten der in den Zwischenraum zwischen den zwei Deckschichten der Trennwand eingebrachten Zwischenschicht aus Polymer-Schaum,
bzw. alternativ umfassend folgende Schritte:
a) Herstellen von zwei jeweils einer der wenigstens zwei einander benachbarten Kammern (18, 18') zugewandten, schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildeten Deckschichten (20, 20') der Trennwand (14),
b) Aufbringen oder Aufsprühen einer mechanische Kräfte und/oder Momente übertragenden und wärmeisolierenden oder einen Wärmefluss reduzierenden Zwischenschicht (22) aus Polymer-Schaum auf die konvexe Oberfläche (28) der unteren Deckschicht (20) der Trennwand (14) oder die konkave Oberfläche (28') der oberen Deckschicht (20') der Trennwand (14),
c) Aushärten der auf die konvexe Oberfläche (28) der unteren Deckschicht (20) der Trennwand (14) oder die konkave Oberfläche (28') der oberen Deckschicht (20') aufgebrachten oder aufgesprühten Zwischenschicht (22) aus Polymer-Schaum,
d) Ausrichten und Fixieren der zwei Deckschichten (20, 20') der Trennwand (14) zueinander, oder
e) Auftragen eines Klebstoffs, insbesondere eines aufschäumenden Klebstoffs, vorzugsweise eines pastösen Klebers, Filmklebers oder Epoxidharzes, auf die Deckschicht (20, 20') der Trennwand (14) und/oder auf die konkave Oberfläche (28') der oberen Deckschicht (20') der Trennwand (14) oder die konvexe Oberfläche (28) der unteren Deckschicht (20) der Trennwand (14), und
f) Ausrichten und Fixieren der zwei Deckschichten (20, 20') der Trennwand (14) zueinander zum Aushärten des Klebstoffs, hat sich in der Praxis neben den bereits im Zusammenhang mit dem Behälter nach der Erfindung beschriebenen Vorteilen, welche die erfindungsgemäßen Verfahren allesamt gleichermaßen aufweisen, als besonders vorteilhaft erwiesen, dass beim Beschäumen eventuell vorhandene Formabweichungen und Fertigungsungenauigkeiten der Deckschichten ausgeglichen und formschlüssig mit dem Polymer-Schaum bzw. der Zwischenschicht aus Polymer-Schaum gefüllt werden können, und dies ohne weitere Bearbeitung, d.h. ohne jeden zusätzlichen zeit- und kostennintensiven Aufwand. Zugleich wird eine Verklebung der gesamten Oberflächen erzielt. Durch eine geeignete Wahl des Polymer-Schaumes eine Verklebung der Deckschichten bereits bei dem bzw. durch das Gieß- und Sprühverfahren selbst erfolgt. Somit kann auf eine zusätzliche Verklebung verzichtet werden. Mittels der erfindungsgemäßen Verfahren lässt sich daher eine einfache, zugleich sehr zuverlässige Anbindung über die gesamten Oberflächen der Deckschichten der Trennwand erreichen, und zwar selbst trotz herstellungsbedingter Formabweichungen (Toleranzen), welche häufig gerade bei Verfahren, wie etwa dem Spinformen, anzutreffen sind.

Weitere vorteilhafte Einzelheiten der erfindungsgemäßen Verfahren sind in den Ansprüchen 14 bis 17 beschrieben und zusätzlich anhand der nachfolgenden Beschreibung näher erläutert.

So ist vorgesehen, dass das Ausrichten der zwei Deckschichten der Trennwand zueinander und mit deren konkaven Oberflächen nach oben sowie das Fixieren der zwei Deckschichten der Trennwand zueinander durch eine Spanneinrichtung, welche in Form und Abmessung an die Form und Abmessung der zwei Deckschichten der Trennwand angepasst ist, durchgeführt wird.

In weitergehender Ausgestaltung des Verfahrens wird das Einbringen der Zwischenschicht aus Polymer-Schaum in den Zwischenraum zwischen den zwei Deckschichten der Trennwand mit der Befüllungs- oder Dosierlanze durch Gießen vorgenommen.

In diesem Zusammenhang wird die Befüllungs- oder Dosierlanze beim Gießen in dem Zwischenraum zwischen den zwei Deckschichten der Trennwand translatorisch oder radial geführt.

In Alternative dazu kann das Einbringen der Zwischenschicht aus Polymer-Schaum in den Zwischenraum zwischen den zwei Deckschichten der Trennwand mit der Befüllungs- oder Dosierlanze durch Sprühen vorgenommen werden.

Die Befüllungs- oder Dosierlanze wird demzufolge beim Sprühen in dem Zwischenraum zwischen den zwei Deckschichten der Trennwand translatorisch oder radial und/oder rotatorisch geführt.

Die ausgehärtete und aus dem Zwischenraum zwischen den zwei Deckschichten der Trennwand ausgetretene Zwischenschicht aus Polymer-Schaum wird zur Anpassung an ein separates und die Deckschichten miteinander verbindendes Verbindungselement (ab-)gefräst oder abgetrennt.

Weiter ist vorgeschlagen, dass die ausgehärtete Zwischenschicht der Trennwand zu deren Anpassung an die konkave Oberfläche der oberen Deckschicht der Trennwand oder die konvexe Oberfläche der unteren Deckschicht der Trennwand gefräst wird.

Entsprechend den Merkmalen des Anspruchs 14 wird in vorteilhafter Weise zusätzlicher Klebstoff, insbesondere aufschäumender Klebstoff, vorzugsweise pastöser Kleber, Filmkleber oder Epoxidharz, zwischen die ausgehärtete Zwischenschicht der Trennwand und die konkave Oberfläche der oberen Deckschicht der Trennwand oder die konvexe Oberfläche der unteren Deckschicht der Trennwand zu deren Toleranzausgleich eingebracht.

Für eine besonderes einfache, schnelle und kostengünstige Möglichkeit zur gleichmäßigen Verteilung des Klebstoffs ist dadurch gesorgt, dass der Klebstoff in die konkave Oberfläche der oberen Deckschicht der Trennwand in einen Bereich des Pols der oberen Deckschicht eingefüllt und durch anschließende Absenkung der konvexen Oberfläche der unteren Deckschicht der Trennwand über die konkave Oberfläche der oberen Deckschicht gleichmäßig verteilt wird.

Alternativ dazu ist vorgesehen, den Klebstoff über mindestens einen Schlauch und/oder mindestens eine Ausnehmung, der/die in der ausgehärteten Zwischenschicht der Trennwand angeordnet bzw. vorgesehen ist/sind, oder mindestens einen Kanal, der in der einen oder den zwei Deckschichten angeordnet bzw. vorgesehen ist, zu injizieren oder zu infiltrieren.

Dabei wird der Klebstoff über den mindestens einen Schlauch und/oder die mindestens eine Ausnehmung in einem Bereich des Äquators der zwei Deckschichten injiziert oder infiltriert; in einen Bereich des Pols der der zwei Deckschichten geführt und anschließend durch Schwerkraft hin zu dem Bereich des Äquators der zwei Deckschichten gleichmäßig verteilt wird.

In alternativer Ausgestaltung des Verfahrens ist vorgesehen, dass der Klebstoff über den mindestens einen Kanal in einem Bereich des Pols der zwei Deckschichten injiziert oder infiltriert und anschließend durch Schwerkraft hin zu dem Bereich des Äquators der zwei Deckschichten gleichmäßig verteilt wird.

Des Weiteren ist darauf abgestellt, dass der Klebstoff vorzugsweise über einen (Klebe-)Spalt, der zwischen der ausgehärteten Zwischenschicht der Trennwand und der konkaven Oberfläche der oberen Deckschicht der Trennwand oder der konvexen Oberfläche der unteren Deckschicht der Trennwand gebildet ist, injiziert oder infiltriert wird.

In diesem Zusammenhang wird der Klebstoff über den Spalt durch Kommunikation mit einem um die zwei Deckschichten umlaufenden Ringkanal injiziert oder infiltriert.

Dass der Klebstoff zur Injektion oder Infiltration mit (Über-)Druck und/oder durch (Unter-)Druck beaufschlagt wird, dient einer schnellen, gezielten und gleichmäßigen Verteilung dessen.

Weiter ist vorgesehen, dass der Klebstoff und/oder die Zwischenschicht vorzugsweise durch eine vollflächige oder lokale Wärmebehandlung zur Reaktion gebracht wird/werden.

Zweckmäßigerweise wird/werden der Klebstoff und/oder die Zwischenschicht dabei durch einen Ofen, eine Einrichtung aus beheizbaren Matten oder eine Umlufteinrichtung vollflächig oder lokal wärmebehandelt.

Von besonderer Bedeutung für die erfindungsgemäßen Verfahren sind die Merkmale des Anspruchs 15, dass nämlich die zwei Deckschichten der Trennwand gemäß Schritt a) durch Spinformen hergestellt werden.

Zusätzlich ist vorgesehen, dass die zwei Deckschichten der Trennwand nach Schritt a) jeweils mit einem etwa Y-förmigen und an dem Mantel des Behälters anbringbaren Ringelement verschweißt werden.

Darüber hinaus wird/werden zweckmäßigerweise die Oberflächen der Deckschichten der Trennwand vor dem Einbringen der Zwischenschicht aus Polymer-Schaum in den Zwischenraum zwischen den zwei Deckschichten der Trennwand oder vor dem Aufbringen oder Aufsprühen der Zwischenschicht aus Polymer-Schaum auf die konvexe Oberfläche der unteren Deckschicht der Trennwand oder die konkave Oberfläche der oberen Deckschicht der Trennwand gemäß Schritt a) gesäubert und/oder chemisch vorbehandelt.

Es liegt weiter im Rahmen der Erfindung, dass nach Anspruch 16 ein offen- oder geschlossenporiger Polymer-Schaum als Zwischenschicht aus Polymer-Schaum in den Zwischenraum zwischen den zwei Deckschichten der Trennwand eingebracht oder auf die konvexe Oberfläche der unteren Deckschicht der Trennwand oder die konkave Oberfläche der oberen Deckschicht der Trennwand aufgebracht oder aufgesprüht wird.

Vorzugsweise wird nach Anspruch 17 ein Polyurethan-Schaum als Zwischenschicht aus Polymer-Schaum in den Zwischenraum zwischen den zwei Deckschichten der Trennwand eingebracht oder auf die konvexe Oberfläche der unteren Deckschicht der Trennwand oder die konkave Oberfläche der oberen Deckschicht der Trennwand aufgebracht oder aufgesprüht.

Schließlich liegt es noch im Rahmen der Erfindung, den erfindungsgemäßen Behälter zum Aufnehmen und Speichern von Flüssigkeiten und viskosen Stoffen, insbesondere von kryogenen Fluiden, vorzugsweise von Sauerstoff und Wasserstoff, nach Anspruch 18 in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, zu verwenden. Ganz besonders eignet sich der erfindungsgemäße Behälter für Raketen-Treibstofftanks oder Satellitentanks.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1: eine schematische Längsschnittansicht durch eine Ausführungsform eines erfindungsgemäß ausgebildeten Behälters,
- Fig. 2: eine schematische Längsschnittansicht durch eine andere Ausführungsform eines erfindungsgemäß ausgebildeten Behälters,
- Fig. 3: eine schematische, teilweise abgebrochene Schnittansicht durch eine Ausführungsform eines erfindungsgemäß ausgebildeten Behälters entsprechend Ausschnitt III in der Fig. 1, in vergrößerter Darstellung,
- Fig. 4: eine schematische, teilweise abgebrochene Querschnittsansicht durch die Ausführungsform des erfindungsgemäß ausgebildeten Behälters entsprechend der Fig. 3, in vergrößerter Darstellung,
- Fig. 5: eine schematische, teilweise abgebrochene Querschnittsansicht durch die Ausführungsform des erfindungsgemäß ausgebildeten Behälters entsprechend den Fig. 3 und 4, in nochmals vergrößerter Darstellung,
- Fig. 6: eine schematische, teilweise abgebrochene Schnittansicht durch eine weitere Ausführungsform eines erfindungsgemäß ausgebildeten Behälters entsprechend Ausschnitt III in der Fig. 1, in vergrößerter Darstellung,
- Fig. 7: eine schematische Längsschnittansicht durch die Ausführungsform einer erfindungsgemäßen Trennwand des erfindungsgemäß ausgebildeten Behälters nach der Fig. 1 zur Erläuterung von zwei Verfahren zu dessen Herstellung,
- Fig. 8: eine schematische perspektivische Ansicht einer Ausführungsform einer Spanneinrichtung zur Herstellung eines erfindungsgemäß ausgebildeten Behälters,
- Fig. 9: eine schematische, halbseitige Längsschnittansicht durch die erfindungsgemäße Trennwand des erfindungsgemäß ausgebildeten Behälters entsprechend der Fig. 7, in vergrößerter Darstellung,
- Fig. 10: eine Draufsicht auf die erfindungsgemäße Trennwand des erfindungsgemäß ausgebildeten Behälters entsprechend den Fig. 7 und 9, in verkleinerter Darstellung,
- Fig. 11: eine Längsschnittansicht durch eine Ausführungsform eines Doms eines erfindungsgemäßen Behälters, der durch zwei Deckschichten und eine Zwischenschicht gebildet ist, in verkleinerter Darstellung,
- Fig. 12: eine teilweise abgebrochene Querschnittansicht im Bereich des Äquators des Doms des erfindungsgemäßen Behälters entsprechend Ausschnitt XII in der Fig. 11, in vergrößerter Darstellung,
- Fig. 13: eine teilweise abgebrochene Querschnittansicht durch eine weitere Ausführungsform eines Doms eines erfindungsgemäßen Behälters entsprechend der Fig. 12,
- Fig. 14: eine teilweise abgebrochene Querschnittansicht durch eine noch weitere Ausführungsform eines Doms eines erfindungsgemäßen Behälters entsprechend der Fig. 12,
- Fig. 15: eine teilweise abgebrochene Querschnittansicht durch eine andere Ausführungsform eines Doms eines erfindungsgemäßen Behälters,
- Fig. 16: eine teilweise abgebrochene Querschnittansicht durch eine noch andere Ausführungsform eines Doms eines erfindungsgemäßen Behälters,
- Fig. 17A und 17B: eine Längsschnittansicht durch einen Dom eines erfindungsgemäßen Behälters, in verkleinerter Darstellung, und eine teilweise abgebrochene Querschnittansicht im Bereich des Pols des Doms entsprechend Ausschnitt XVIIB in der Fig. 17A, in vergrößerter Darstellung, zur Erläuterung einer Ausführungsform eines erfindungsgemäßen Verfahrens,
- Fig. 18A bis 18C: eine Längsschnittansicht durch einen Dom eines erfindungsgemäßen Behälters, in verkleinerter Darstellung, und teilweise abgebrochene Querschnittansichten im Bereich des Äquators und des Pols des Doms entsprechend Ausschnitt XVIIIB und XVIIIC in der Fig. 18A, in vergrößerter Darstellung, zur Erläuterung einer weiteren Ausführungsform eines erfindungsgemäßen Verfahrens,
- Fig. 19A bis 19C: eine Längsschnittansicht durch einen Dom eines erfindungsgemäßen Behälters, in verkleinerter Darstellung, und teilweise abgebrochene Querschnittansichten im Bereich des Äquators und des Pols des Doms entsprechend Ausschnitt XIXB und XIXC in der Fig. 19A, in vergrößerter Darstellung, zur Erläuterung einer noch weiteren Ausführungsform eines erfindungsgemäßen Verfahrens,
- Fig. 20: eine Längsschnittansicht durch einen Dom eines erfindungsgemäßen Behälters, in verkleinerter Darstellung, zusammen mit einem Ringkanal zur Erläuterung einer anderen Ausführungsform eines erfindungsgemäßen Verfahrens,
- Fig. 21A und 21B: eine perspektivische Längsquerschnittansicht durch und eine Seitenansicht auf eine Einrichtung von beheizbaren Matten zur Erläuterung eines Teils eines erfindungsgemäßen Verfahrens, und
- Fig. 22: eine Längsquerschnittansicht durch eine Umluftgebläseeinrichtung zur Erläuterung eines Teils eines erfindungsgemäßen Verfahrens.

Bei der nachfolgenden Beschreibung einer Ausführungsform eines erfindungsgemäßen Behälters 10 zum Aufnehmen und Speichern von Flüssigkeiten und viskosen Stoffen, insbesondere von kryogenen Fluiden, sind einander entsprechende, gleiche Bauteile jeweils mit identischen Bezugsziffern versehen.

Der erfindungsgemäße Behälter 10 zum Aufnehmen und Speichern von Flüssigkeiten und viskosen Stoffen, insbesondere von kryogenen Fluiden, vorzugsweise von Sauerstoff und Wasserstoff, findet in vorteilhafter Weise in Fahrzeugen, insbesondere in Luftfahrzeugen oder Fluggeräten der Luft- und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, Verwendung. In ganz besonderem Maße lässt sich der erfindungsgemäße Behälter 10 für ein Fluggerät der Luft- und Raumfahrt, wie etwa einen Raketen-Treibstofftank oder Satellitentank, einsetzen.

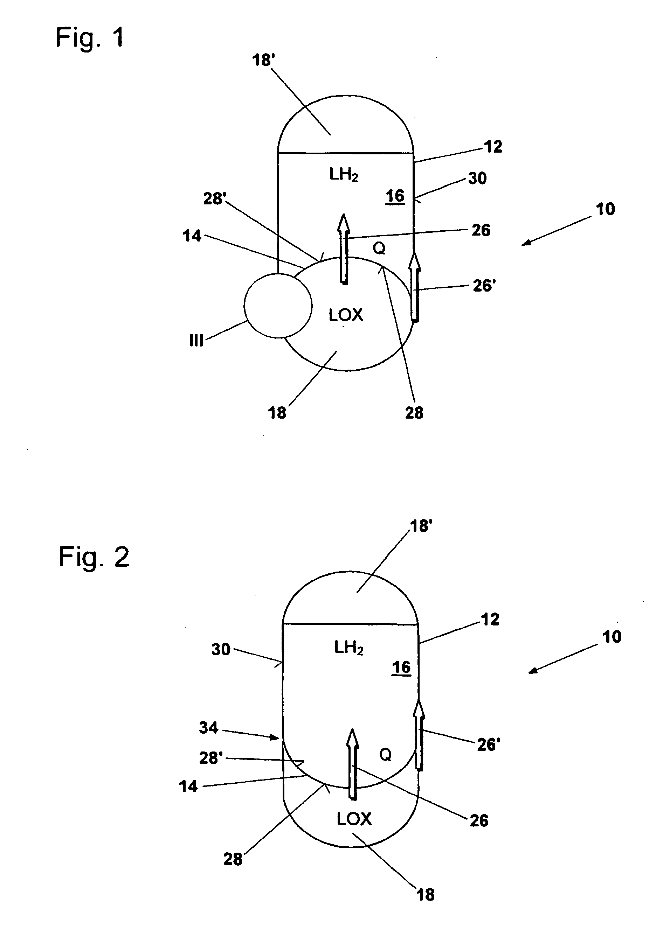

Die in den Fig. 1 und 2 schematisch dargestellten Behälter 10 nach der Erfindung umfassen einen, insbesondere dünnwandigen, Mantel 12 und mindestens eine Trennwand 14. Die mindestens eine Trennwand 14 unterteilt den Innenraum 16 des Behälters 10 in wenigstens zwei einander benachbarte Kammern 18, 18'. In den Kammern 18, 18' sind zum Beispiel kryogene Fluide, wie Sauerstoff (LOX) und Wasserstoff (LH2), aufgenommen und gespeichert, die als Treibstoff/Oxidator-Gemisch einer Oberstufe einer Trägerrakete (jeweils nicht dargestellt) Verwendung finden.

Entsprechend den Fig. 1 und 2 weisen beide Behälter 10 jeweils nur eine einzige Trennwand 14 zur Unterteilung des Innenraumes 16 in zwei gesonderte Kammern 18, 18' auf. Die Trennwand 14 ist den zwei Kammern 18, 18' des Behälters gemeinsam.

Die in den Fig. 1 und 2 dargestellten Ausführungsformen des erfindungsgemäßen Behälters 10 unterscheiden sich lediglich in der Ausbildung der Trennwand 14 selbst bzw. der Anordnung der Trennwand 14 innerhalb des Mantels 12 des Behälters 10. So ist die Trennwand 14 bei der Ausführungsform des Behälters 10, die in der Fig. 1 dargestellt ist, konkav ausgebildet. Demgegenüber ist die Trennwand 14 bei der Ausführungsform des Behälters 10, die in der Fig. 2 gezeigt ist, konvex ausgestaltet. Im Übrigen stimmen die zwei Ausführungsformen der Trennwand 14 des erfindungsgemäßen Behälters 10 nach den Fig. 1 und 2 in konstruktiver Hinsicht überein.

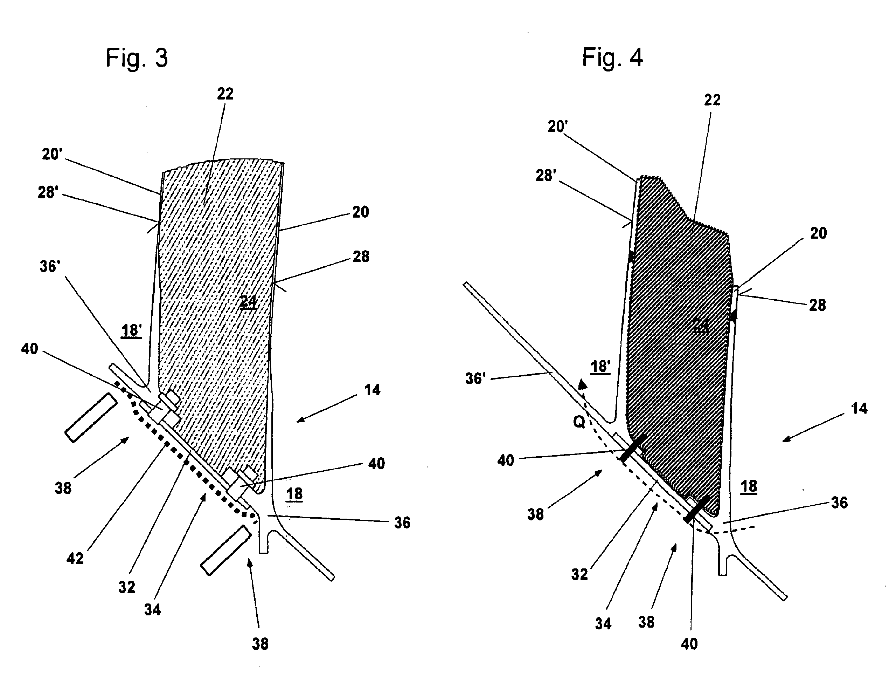

Wie sich den Fig. 3 bis 5 entnehmen lässt, ist die mindestens eine, d.h. vorliegend einzige, Trennwand 14 in Sandwichbauweise ausgebildet.

Dabei umfasst die Trennwand 14 zwei Deckschichten 20, 20', nämlich eine untere bzw. untenliegende (d.h. hier besser rechte) Deckschicht 20 bzw. Deckblech bzw. Domschale und eine obere bzw. obenliegende (d.h. hier besser linke) Deckschicht 20' bzw. Deckblech bzw. Domschale, welche jeweils einer der zwei einander benachbarten Kammern 18, 18' zugewandt sind. Demnach ist die untere Deckschicht 20 der unteren bzw. unten angeordneten Kammer 18, die obere Deckschicht 20' der oberen bzw. oben angeordneten Kammer 18' zugewandt.

Weiterhin umfasst die Trennwand 14 eine Zwischenschicht 22 aus Polymer-Schaum. Die Zwischenschicht 22 aus Polymer-Schaum ist in einem Zwischenraum 24 zwischen den zwei Deckschichten 20, 20' angeordnet.

Einerseits ist die Zwischenschicht 22 aus Polymer-Schaum geeignet, mechanische Kräfte und/oder Momente zwischen den Kammern 18, 18' bzw. diesen zugewandten Deckschichten 20, 20' zu übertragen.

Andererseits weist die Zwischenschicht 22 aus Polymer-Schaum wärmeisolierende oder jedenfalls eine Wärmefluss reduzierende Eigenschaften auf. Wenn beispielsweise in den zwei Kammern 18, 18' kryogene Fluide, etwa Sauerstoff (LOX) und Wasserstoff (LH2), aufgenommen und gespeichert sind, ist zwischen den Kammern 18, 18' ein Temperaturgradient vorhanden. Während nämlich Sauerstoff eine Temperatur von ungefähr 90 K aufweist, besitzt Wasserstoff eine Temperatur von ungefähr 24 K. Dies hat eine Interaktion zwischen dem Sauerstoff als dem wärmeren Fluid und dem Wasserstoff als dem kälteren Fluid zur Folge.

Zurückkommend auf die Fig. 1 und 2, findet insoweit ein Wärmefluss entsprechend den Pfeilen 26, 26' zwischen der Kammer 18 und der Kammer 18' statt. Der Wärmefluss ist in den Fig. 1 und 2 mit "Q" bezeichnet. Wie bei Behältern des Standes der Technik zu beobachten ist, erfolgt der Wärmefluss entsprechend den Pfeilen 26, 26' nicht ausschließlich über die Oberflächen 28, 28' der Deckschichten 20, 20', sondern findet ebenfalls über den Mantel 12 und die Oberfläche 30 des Mantels 12 im Bereich der gemeinsamen Trennwand 14 statt. Dabei ist eine Aufteilung des Wärmeflusses entsprechend Pfeil 26 zu etwa 60 % über die Oberflächen 28, 28' der Deckschichten 20, 20' und entsprechend Pfeil 26' zu etwa 40 % über den Mantel 12 bzw. dessen Oberfläche 30 festzustellen.

Aufgrund der Aufnahme und Speicherung von Sauerstoff und Wasserstoff in den zwei Kammern 18, 18' des Behälters 10 kommt es infolge des Wärmeflusses entsprechend den Pfeilen 26, 26' zu einem sogenannten Abdampfen von Wasserstoff. Der Wärmefluss, der über die Oberflächen 28, 28' der Deckschichten 20, 20' entsprechend Pfeil 26 übertragen wird, kann durch die konstruktive Ausgestaltung der Trennwand 14 des Behälters 10 und die Zwischenschicht 22 aus Polymer-Schaum in besonders einfacher und zugleich wirkungsvoller Weise verhindert oder zumindest erheblich reduziert werden. Hierdurch wiederum lässt sich ein Abdampfen von Wasserstoff infolge Wärmeleitung zwischen den zwei Kammern 18, 18' gänzlich oder weitestgehend ausschließen oder zumindest die abgedampfte Masse des Wasserstoffes minimieren.

In vorteilhafter Weise ist der Zwischenraum 24 von der Zwischenschicht 22 aus Polymer-Schaum vollständig befüllt bzw. ausgefüllt. Durch die vollständige Ausfüllung des Zwischenraumes 24 zwischen den zwei Deckschichten 20, 20' ist eine Übertragung von mechanischen Kräften und/oder Momenten zuverlässig sichergestellt. Ebenso ermöglicht eine vollständige Ausfüllung des Zwischenraumes 24 zwischen den zwei Deckschichten 20, 20' eine bestmögliche Wärmeisolierung bzw. Reduzierung des Wärmeflusses insgesamt.

Vorzugsweise ist die Zwischenschicht 22 in dem von den zwei Deckschichten 20, 20' begrenzten Zwischenraum 24 aus einem offen- oder geschlossenporigen Polymer-Schaum gebildet. In ganz vorteilhafter Weise besteht die Zwischenschicht 24 in diesem Zusammenhang aus Polyurethan-Schaum.

Des Weiteren umfasst die Trennwand 14 des erfindungsgemäßen Behälters 10 ein Verbindungselement 32 bzw. Verbindungsblech, das zu dem Mantel 12, den Deckschichten 20, 20' und der Zwischenschicht separat ausgebildet ist. Das Verbindungselement 32 der Trennwand 14 verbindet die zwei Deckschichten 20, 20', welche jeweils einer der zwei einander benachbarten Kammern 18, 18' zugewandt sind. Das Verbindungselement 32 der Trennwand 14 begrenzt dabei den Zwischenraum 24 zwischen den zwei Deckschichten 20, 20' rand- bzw. umfangsseitig, d.h. in einem Rand- bzw. Umfangsbereich 34.

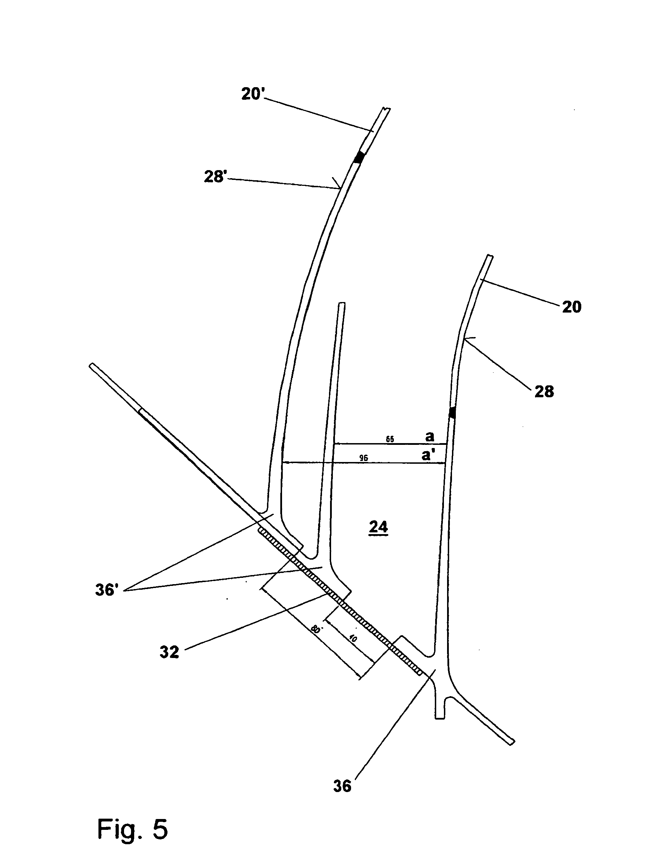

Wie aus den Fig. 3 bis 5 und insbesondere aus der Fig. 5 hervorgeht, ist das Verbindungselement 32 der Trennwand 14 an den zwei Deckschichten 20, 20' mittelbar über zwei Ringelemente 36, 36' befestigt. Die zwei Ringelemente 36, 36' sind etwa Y-förmig ausgestaltet und an dem Mantel 12 des Behälters 10, insbesondere mittels Verschweißung, angebracht (nicht gezeigt).

Ohne im Einzelnen dargestellt zu sein, ist es ebenso denkbar, das Verbindungselement 32 der Trennwand 14 an den zwei Deckschichten 20, 20' der Trennwand 14 unmittelbar zu befestigen. Wie sich den Fig. 3 bis 5 weiterhin entnehmen lässt, ist das Verbindungselement 32 der Trennwand 14 an den zwei etwa Y-förmigen Ringelementen 36, 36' oder dazu alternativ - wiederum ohne im Einzelnen dargestellt zu sein - an den zwei Deckschichten 20, 20' der Trennwand 14 über eine Bolzenverbindung 38 befestigt. Dabei kann die Befestigung durch die Bolzenverbindung 38 mittels zum Beispiel Blindnieten 40 erfolgen. Hierdurch wird eine Beschädigung der Zwischenschicht 22 aus Polymer-Schaum, zum Beispiel infolge Eintrages von Hitze beim Schweißen, vermieden.

Das Verbindungselement 32 der Trennwand 14 ist darüber hinaus, wie vor allem in der Fig. 5 dargestellt ist, in seinen Abmessungen an den Abstand a, a' zwischen den zwei Deckschichten 20, 20' und damit die Dicke der Zwischenschicht 22 in dem Zwischenraum 24 zwischen den zwei Deckschichten 20, 20' angepasst. Auf diese Weise ist eine vielseitige Verwendungsmöglichkeit des erfindungsgemäßen Behälters 10 gewährleistet. Der erfindungsgemäße Behälter 10 kann an verschiedenste Konzepte von zum Beispiel Oberstufen und Trägerraketen variabel angepasst werden. Insbesondere lässt sich die Dicke der Zwischenschicht 24 in Abhängigkeit des vollständig zu unterbindenden oder zumindest zu reduzierenden Wärmeflusses zwischen den zwei Kammern 18, 18' des Behälters 10 beliebig (aus)wählen. Das Verbindungselement 32 kann dabei in seiner Länge beliebig variiert werden. Mit Abnehmen der Länge des Verbindungselementes 32 lässt sich gleichzeitig, wie dem Fachmann bekannt, die Dicke des Verbindungselementes 32 vermindern. Eine weitergehende Gewichtseinsparung ist die Folge.

Weiterhin ist das Verbindungselement 32 der Trennwand 14 aus einem hochfesten und wärmeisolierenden oder einen Wärmefluss reduzierenden Material gebildet. Zum einen muss das Verbindungselement aus einem Material bestehen, das hohe Festigkeiten zur Übertragung von mechanischen Lasten aufweist. Zum anderen muss das Verbindungselement aus einem Material gebildet sein, das parallel dazu einen niedrigen Wärmeleitungskoeffizienten besitzt. Der Wärmefluss, der über das Verbindungselement 32 der Trennwand 14 zwischen den zwei Deckschichten 20, 20' entsprechend Pfeil 26' übertragen wird, kann durch geeignete Wahl des verwendeten Materials in besonders einfacher und zugleich wirkungsvoller Weise unterbunden oder zumindest erheblich reduziert werden. Hierdurch lässt sich ebenfalls ein Abdampfen von Wasserstoff infolge Wärmeleitung über das Verbindungselement 32 gänzlich oder weitestgehend ausschließen oder zumindest die abgedampfte Masse des Wasserstoffes minimieren.

Das Verbindungselement 32 der Trennwand 14 ist daher aus Metall, insbesondere aus Stahl, Edelstahl, Aluminium, Titan, eine Legierung daraus und/oder einer Kombination daraus, und in ganz vorteilhafter Weise aus Stahl oder Titan gebildet.

Wie darüber hinaus in der Fig. 3 dargestellt ist, ist das Verbindungselement 32 der Trennwand 14 zusätzlich außenseitig durch einen Überzug 42 gesondert abgedichtet. Der Überzug 42 ist als Folie aus Metall ausgestaltet, welche an den zwei etwa Y-förmigen und an dem Mantel 14 des Behälters 10 angebrachten Ringelementen 36, 36', insbesondere mittels Verschweißung, befestigt sind. Durch den Überzug 42 ist eine Dichtung und damit Isolationswirkung der gemeinsamen Trennwand 14 des Behälters 10 sichergestellt, wodurch ein Eindringen von Wasser infolge von Luftfeuchtigkeit verhindert wird.

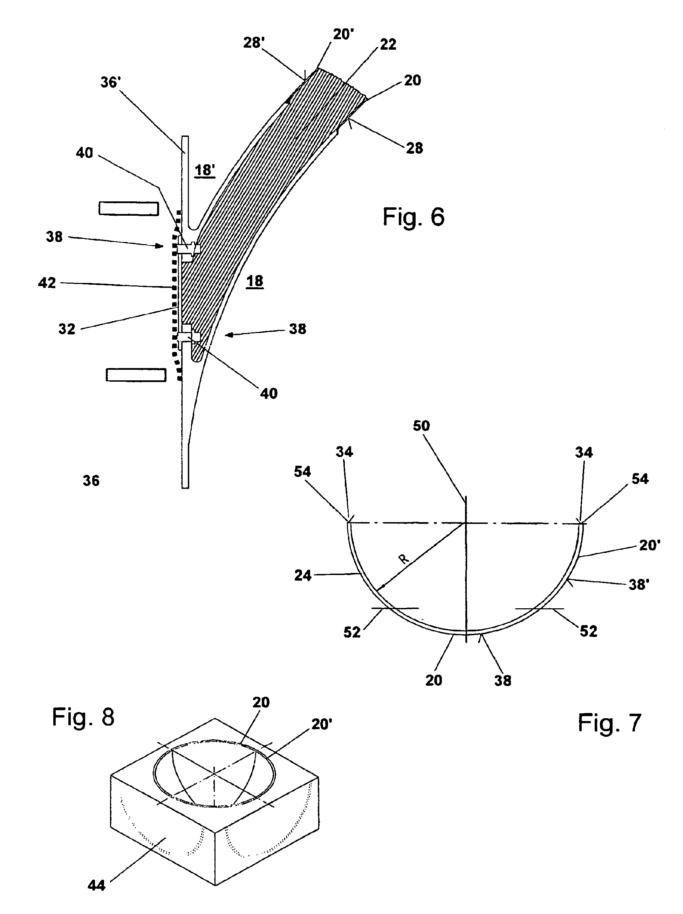

Die Ausführungsform des erfindungsgemäßen Behälters 10, die in der Fig. 6 dargestellt ist, unterscheidet sich von der Ausführungsform des in den Fig. 3 bis 5 gezeigten Behälters 10 lediglich durch die Ausbildung des Mantels 12 des Behälters 10 und der Zwischenschicht 22 aus Polymer-Schaum. Während der Mantel 12 des Behälters 10 bei dem in den Fig. 3 bis 5 dargestellten Ausführungsbeispiel im Bereich der Trennwand 14 in einem Winkel von etwa 45° gegenüber der Vertikalen verläuft, ist der Mantel 10 bei der Ausführungsform nach der Fig. 6 im Bereich der Trennwand 14 im Wesentlichen vertikal ausgebildet. Des Weiteren ist die Dicke der Zwischenschicht 22 aus Polymer-Schaum bei der in den in den Fig. 3 bis 5 veranschaulichten Ausführungsform etwa doppelt so groß ausgebildet wie bei der in der Fig. 6 gezeigten Ausführungsform.

Die zwei Deckschichten 20, 20' der Trennwand 14, die jeweils einer der zwei einander benachbarten Kammern 18, 18' zugewandt sind, sind bei den dargestellten Ausführungsformen des erfindungsgemäßen Behälters 10 nach den Fig. 1 bis 10 rotationssymmetrisch ausgebildet. Ohne im Einzelnen dargestellt zu sein, ließe sich ebenso eine nicht rotationssymmetrische Ausgestaltung der zwei Deckschichten 20, 20' verwirklichen. Dabei sind die zwei Deckschichten 20, 20' der Trennwand 14 schalenförmig, insbesondere halbkugelförmig, kugelkappenförmig, kalottenförmig, ellipsoidkallotenförmig, konisch, elliptisch, in Cassini-Form oder mit anderen Querschnittsformen ausgestaltet. Die zwei Deckschichten 18, 18' der Trennwand 14 sind in ganz vorteilhafter Weise durch Spinnformen hergestellt.

Der Behälter 10, insbesondere der Mantel 12 und die etwa Y-förmigen Ringelemente 36, 36' des Behälters 10 sind in Leichtbauweise ausgeführt. Insbesondere bestehen der Behälter 10 bzw. der Mantel 12 und die etwa Y-förmigen Ringelemente 36, 36' des Behälters 10 aus Metall, vorzugsweise aus Stahl, Edelstahl, Aluminium, Titan, einer Legierung daraus und/oder eine Kombination daraus.

Bei den in den Fig. 3 bis 6 gezeigten Ausführungsformen des erfindungsgemäßen Behälters 10 weisen die zwei Deckschichten 20, 20' der Trennwand 14 eine zueinander im Wesentlichen identische Form auf.

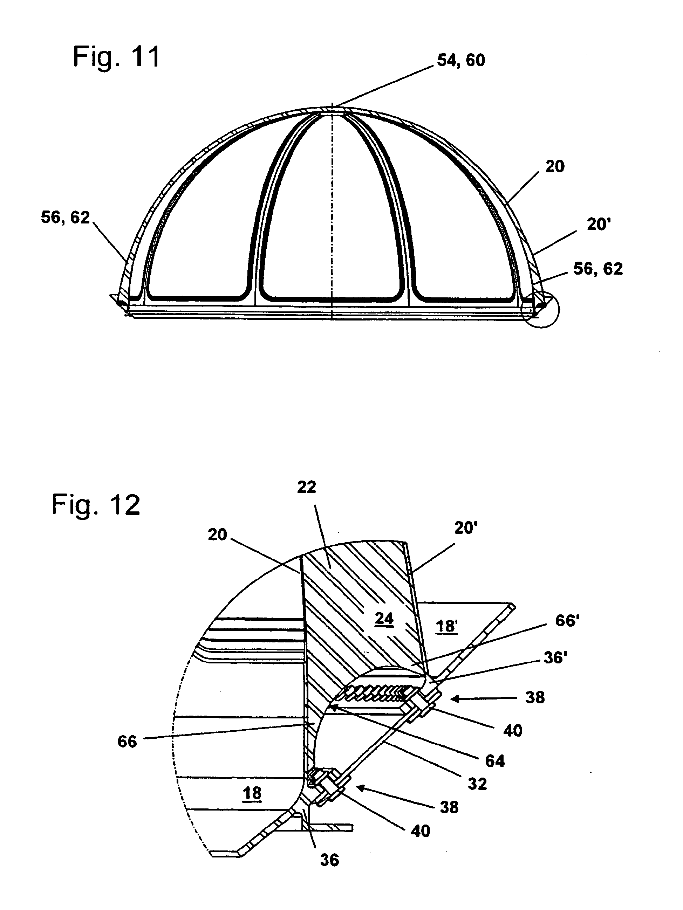

Demgegenüber sind die zwei Deckschichten 20, 20' der Ausführungsformen des erfindungsgemäßen Behälters 10, die in Fig. 11 bis 22 dargestellt sind, eine voneinander abweichende Form, und zwar derart, dass die Deckschichten 20, 20' vom Pol 56 bzw. Apex der Deckschichten 20, 20' bzw. des von diesen gebildeten Domes des Behälters 10 zum Äquator 58 der Deckschichten 20, 20' bzw. des von diesen gebildeten Doms des Behälters 10 hin voneinander zunehmend beabstandet sind.

In Fig. 11 ist deutlich zu erkennen, dass die zwei Deckschichten 20, 20' am Pol 54 mit ca. 40 mm dünner sind als am Äquator 56 mit ca. 100 mm. Eine solche "Aufweitung" vom Pol 54 hin zum Äquator 54 des Domes verbessert das Abtragen von Schubkräften in die zwei etwa Y-förmigen, als Auflager dienenden Ringelemente 36, 36'.

Gleichzeitig erhält die Zwischenschicht 22 aus Polymer-Schaum hierdurch eine Dicke bzw. Höhe zwischen den zwei Deckschichten 20, 20', die von der Mitte 60 hin zu einem rand- bzw. umfangsseitigen Bereich 62 der zwei Deckschichten (20, 20') kontinuierlich zunimmt.

Durch eine solche zunehmende Beabstandung der zwei Deckschichten 20, 20' zueinander bzw. eine solche "Aufweitung" der Dicke bzw. Höhe der Zwischenschicht 22 aus Polymer-Schaum von der Mitte 60, d.h. vom Pol 56, hin zu einem rand- bzw. umfangsseitigen Bereich 62, d.h. zum Äquator 58, lässt sich das Ableiten von Schubkräften erheblich verbessern.

Wie sich der Fig. 12 entnehmen lässt, ist die Zwischenschicht 22 aus Polymer-Schaum entsprechend der gezeigten Ausführungsform im rand- bzw. umfangsseitigen Bereich 62 der zwei Deckschichten 20, 20' mit einer Ausnehmung 64 oder Aussparung versehen. Zudem weist die Zwischenschicht 22 zwei Übergangsbereiche 66, 66' auf, die durch die Ausnehmung 64 oder Aussparung gebildet sind. Die zwei Übergangsbereiche 66, 66' besitzen eine abnehmende Form und/oder Dicke, die jeweils an einer der Deckschichten 20, 20' befestigt sind. Mittels eines solchen "sanften" Überganges der Zwischenschicht 22 zu den zwei Deckschichten 20, 20' kann die Einleitung einer im Bereich des Äquators 58, d.h. im rand- bzw. umfangsseitigen Bereich 62, kumulierenden Schubspannung in die Ringstruktur maßgeblich verbessert werden. Des Weiteren wird der Steifigkeitssprung bei einem "sanften" Übergang zwischen der Zwischenschicht 22 aus Polymer-Schaum, Klebstoff 67 und den zwei Deckschichten 20, 20' durch den sanften Auslauf der Zwischenschicht 22 deutlich gemindert. Diese kontinuierliche Krafteinleitung hat den weiteren Vorteil, dass ein Abschäleffekt (peeling) in der Klebefuge, der die Deckschichten 20, 20' von der Zwischenschicht 22 bzw. dem Kernmaterial abzulösen versucht, ebenfalls abgeschwächt wird bzw. vollständig vermieden wird.

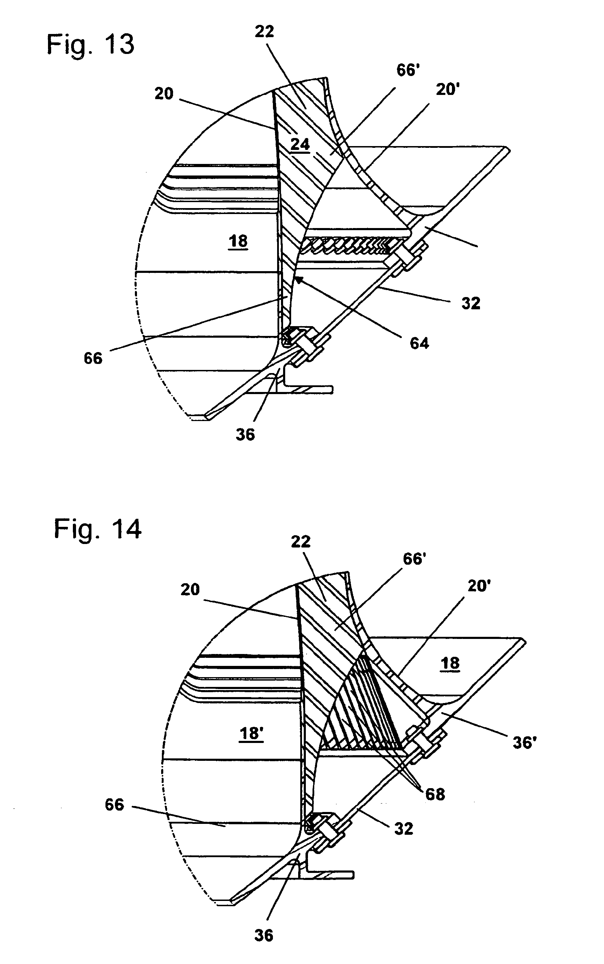

Der "sanfte" Übergang der Zwischenschicht 22 ist in Form und Abmessung nicht festgelegt und kann beliebig, wie etwa bei dem Ausführungsbeispiel, das in der Fig. 13 dargestellt ist, ausgestaltet sein. Dabei ist der der Deckschicht 20 zugewandte Übergangsbereich 66 langgestreckt und verhältnismäßig flach ausgebildet, während der der Deckschicht 20' zugewandte Übergangsbereich 66' kleingehalten ist.

In der Fig. 14 ist eine noch andere Ausführungsform des erfindungsgemäßen Behälters 10 gezeigt. Dabei entspricht der "sanfte" Übergang der Zwischenschicht 22 demjenigen wie bei der Ausführung nach der Fig. 13. Einer der zwei etwa Y-förmigen Ringe 36, 36' ist mit zusätzlich integral angeformten, d.h. einstückigen, Versteifungsrippen 68 versehen, die zum Beispiel Ausfräsen von Taschen gebildet sein können.

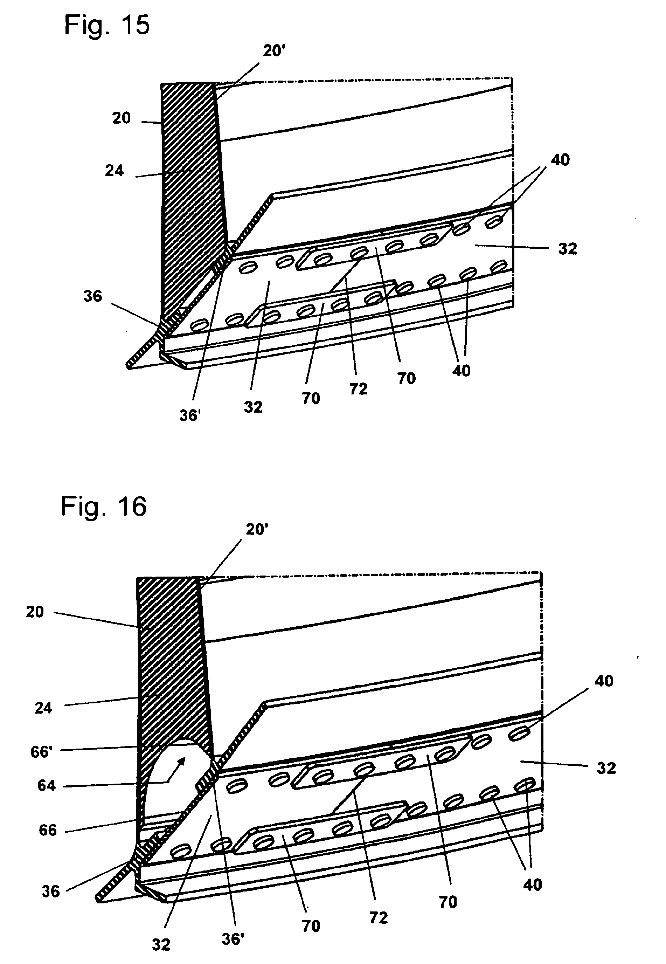

In den Fig. 15 und 16 sind weitere Ausführungsformen des erfindungsgemäßen Behälters 10 dargestellt. Das Verbindungselement 32 der Trennwand 14 ist an den zwei etwa Y-förmigen Ringelementen 36, 36' über die Bolzenverbindung 38 befestigt, allerdings im Gegensatz zu den Ausführungen nach den Fig. 3 bis 6, nicht ohne, sondern unter Zwischenanordnung von Dopplerelementen 70. Dopplerelemente 70, wie Dopplerbleche, reduzieren an einer Nahtstelle 72 von zwei benachbarten Verbindungselementen 32 die Belastung der Randnieten 40 um ca. 20 bis 30 %. Fig. 3 bis 6 zeigen eine sogenannte ein-schnittige Verbindung. Dabei werden die Randnieten 40 mit 100 % und der mittlere Niet mit ca. 20 % der Kraft belastet.

Die Fig. 15 und 16 zeigen demgegenüber jeweils eine zweischnittige Verbindung. Das jeweilige Y-förmige Ringelement 36, 36', das Verbindungselement 32 und das Dopplerelement 70 sind über die Blindnieten 40 miteinander verbunden. Durch diesen Aufbau erfolgt eine Krafthomogenisierung bzw. Kraftverteilung und somit eine entsprechende Belastungsreduktion der Randnieten 40. Die hohen Schubspannungen, welche die Randnieten 40 des Aufbaus in Fig. 3 bis 6 tragen müssen, werden durch die Konstruktion gemäß Fig. 15 und 16 auf die zur Mitte hin angeordneten Nieten 40 aufgeteilt. Würde man kein Dopplerelement 70 einsetzen, könnten die Randnieten 40 versagen und die Last auf die zur Mitte hin folgenden Nieten 40 übertragen, welche wiederum versagen usw.

Die Dopplerbleche, wie in den Fig. 15 und 16 dargestellt, sind dabei möglichst schmal ausgebildet, um die thermischen Verhältnisse bzw. den Wärmefluss möglichst gering zu halten.

Die Herstellung der in den Fig. 1 bis 6 dargestellten Ausführungsformen des erfindungsgemäßen Behälters 10 wird nachfolgend näher erläutert:

Zunächst werden zwei Deckschichten 20, 20' der Trennwand 14, die jeweils einer der zwei einander benachbarten Kammern 18, 18' zugewandt sind, hergestellt. Die zwei Deckschichten 20, 20' werden dabei schalenförmig, insbesondere halbkugelförmig, kugelkappenförmig, kalottenförmig, ellipsoidkallotenförmig, konisch, elliptisch, in Cassini-Form oder mit anderen Querschnittsformen ausgestaltet. In besonders vorteilhafter Weise werden die zwei Deckschichten 20, 20' der Trennwand 14 durch Spinformen hergestellt.

Im Anschluss daran werden die zwei Deckschichten 20, 20' der Trennwand 14 jeweils mit einem etwa Y-förmigen Ringelement 36, 36' verschweißt. Insoweit wird das eine Y-förmige Ringelement 36 mit der unteren Deckschicht 20 der Trennwand 14 durch Verschweißung verbunden. Das andere Y-förmige Ringelement 36' wird hingegen an die obere Deckschicht 20' der Trennwand 14 angeschweißt. Über die beiden etwa Y-förmigen Ringelemente 36, 36' ist die Trennwand 14 des Behälters 10 schließlich an dem Mantel 12 des Behälters 10 mittels Verschweißung anbringbar, nachdem die Herstellung der Trennwand 14 selbst insgesamt abgeschlossen ist.

Die Oberfläche/n 28, 28' der Deckschichten 20, 20' der Trennwand 14 wird/werden in aller Regel gemäß Schritt a) gesäubert und/oder chemisch vorbehandelt, bevor die Zwischenschicht 22 aus Polymer-Schaum in den Zwischenraum 24 zwischen den zwei Deckschichten 20, 20' der Trennwand 14 oder vor dem Aufbringen oder Aufsprühen der Zwischenschicht 22 aus Polymer-Schaum auf die konvexe Oberfläche 28 der unteren Deckschicht 20 der Trennwand 14 oder die konkave Oberfläche 28' der oberen Deckschicht 20' der Trennwand 14, d.h. die die Anbindungsoberfläche, eingebracht wird. Auf diese Weise lässt sich die Haftfähigkeit und damit die Anbindung der Zwischenschicht 22 an den zugewandten bzw. zugeordneten Oberflächen 28, 28' der Deckschichten 20, 20' wesentlich verbessern.

Bis zu diesem Verfahrensschritt unterscheiden sich die 3 nachfolgend vorgestellten Verfahren zur Herstellung des erfindungsgemäßen Behälters 10 nicht:

### Verfahren 1

Bei einem ersten Verfahren nach der Erfindung werden die zwei Deckschichten 20, 20' mit den jeweiligen Y-förmigen Ringelementen 36, 36' in die später gewünschte Position verbracht, zueinander und mit deren konkaven Oberflächen 28, 28' nach oben ausgerichtet und fixiert. Ausrichtung und Fixierung der zwei Deckschichten 20, 20' erfolgen entsprechend der Fig. 7 mit deren konkaven Oberflächen 28, 28' nach oben, um den Zwischenraum 24 zwischen den zwei Deckschichten 20, 20' ideal mit Polymer-Schaum zu füllen und gleichzeitig ein Ausfließen von noch nicht ausreagiertem Polymer-Schaum zu verhindern. Die Fixierung der zwei Deckschichten 20, 20' der Trennwand 14 zueinander und mit deren konkaven Oberflächen 28, 28' nach oben erfolgt mittels einer Spanneinrichtung 44. Die Spanneinrichtung 44, die beispielhaft schematisch in der Fig. 8 gezeigt ist, ist in Form und Abmessung an die Form und Abmessung der zwei halbschalenförmigen Deckschichten 20, 20' angepasst.

Sodann erfolgt ein sogenannter Gießprozess.

Dabei wird die Zwischenschicht 22 aus Polymer-Schaum, die/der mechanische Kräfte und/oder Momente überträgt und wärmeisolierende oder einen Wärmefluss reduzierende Eigenschaften aufweist, in den Zwischenraum 24 zwischen den zwei Deckschichten 20, 20' der Trennwand 14 durch Gießen eingebracht.

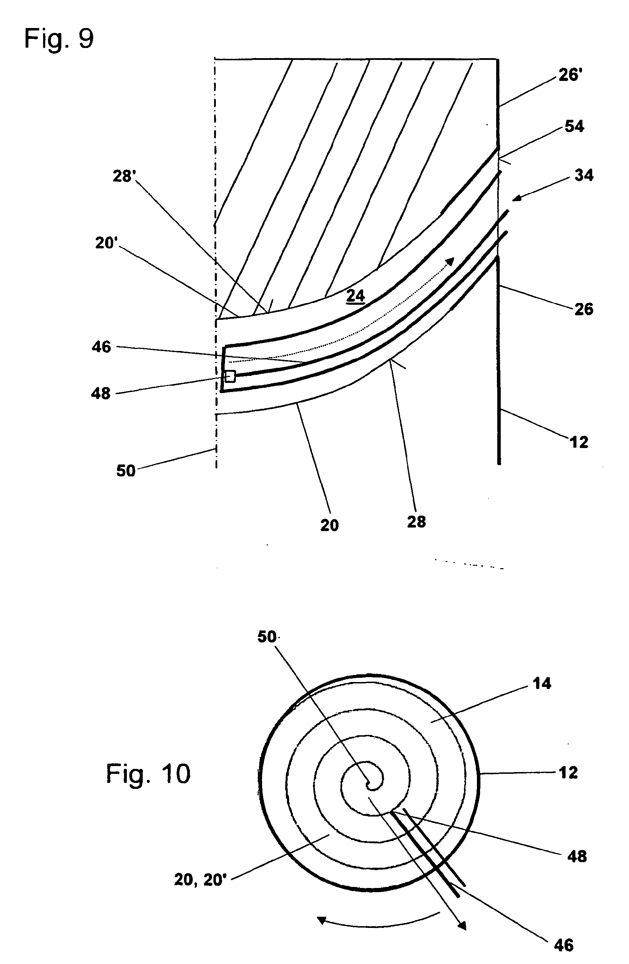

Das Einbringen des Polymer-Schaumes wird mit einer Befüllungs-oder Dosierlanze 46, welche in der Fig. 9 detailliert dargestellt ist, vorgenommen. Die Befüllungs- oder Dosierlanze 40 ist mit einem Lanzenkopf 48 versehen. Die Befüllungs- oder Dosierlanze 46 mit dem Lanzenkopf 48 wird zunächst translatorisch bzw. radial in den Zwischenraum 24 bis etwa zu bzw. nahe der Mittelachse 50 bzw. des Pols der Deckschichten 20, 20' hineingeschoben. Über den Lanzenkopf 48 wird der Polymer-Schaum in den Zwischenraum 24 zwischen die konkave Oberfläche 28 der unteren Deckschicht 20 und der konvexen Oberfläche 28' der oberen Deckschicht 20 eingeführt und zur Reaktion gebracht (in-situ-Schäumen), wobei eine Volumenzunahme erfolgt.

Während der Einführung des Polymer-Schaumes wird der Zwischenraum 24 zwischen den zwei Deckschichten 20, 20' der Trennwand 14 vollständig befüllt. Der Füllstand 52, die in der Fig. 7 durch Strichlinien angedeutet ist, wandert während der Befüllung von der Mittelachse 50 nach oben hin zu dem Rand- bzw. Umfangsbereich 34 der Deckschichten 20, 20'. Gleichzeitig wird die Befüllungs- oder Dosierlanze 46 mit dem Lanzenkopf 48 translatorisch bzw. radial entsprechend dem zunehmendem Füllstand 52 aus dem Zwischenraum 24 der Trennwand 14 herausgezogen.

Durch die Öffnung 54 im Rand- bzw. Umfangsbereich 34 der zwei Deckschichten 20, 20' wird eine Ausbreitung des Polymer-Schaumes während dessen Reaktion nicht behindert. Eine Druckaufbau zwischen den zwei Deckschichten 20, 20' wird somit vermindert. Gleichzeitig kann infolge der Reaktion entstandener, überschüssiger Polymer-Schaum über die Öffnung 54 im Rand- bzw. Umfangsbereich 34 überquellen und in die Umgebung austreten. Der Füllvorgang ist damit zum Abschluss gebracht.

Bereits beim Einbringen wie auch im Anschluss daran wird die in den Zwischenraum 24 zwischen den zwei Deckschichten 20, 20' der Trennwand 14 eingebrachte Zwischenschicht 22 aus Polymer-Schaum ausgehärtet.

Zum Schluss wird die ausgehärtete Zwischenschicht 22 aus Polymer-Schaum, die aus dem Zwischenraum 24 zwischen den zwei Deckschichten 20, 20' der Trennwand 14 über die Öffnung 54 im Rand- bzw. Umfangsbereich 34 ausgetreten ist, zur Anpassung an das separate und die Deckschichten 20, 20' miteinander verbindende Verbindungselement 32 (ab-)gefräst oder abgetrennt.

Die so fertiggestellte Trennwand 14 steht zur Endmontage und anschließenden Verschweißung an dem Mantel 12 des erfindungsgemäßen Behälters über die etwa Y-förmigen Ringelemente 36, 36' zur Verfügung.

### Verfahren 2

Ein zweites Verfahren nach der Erfindung unterscheidet sich von dem ersten Verfahren dahingehend, als dieses Verfahren anstelle eines sogenannten Gießprozesses auf einem Sprühprozess beruht.

Dabei wird die Zwischenschicht 22 aus Polymer-Schaum, die/der mechanische Kräfte und/oder Momente überträgt und wärmeisolierende oder einen Wärmefluss reduzierende Eigenschaften aufweist, in den Zwischenraum 24 zwischen den zwei Deckschichten 20, 20' der Trennwand 14 durch Sprühen eingebracht.

Das Einbringen des Polymer-Schaumes wird mit der Befüllungs-oder Dosierlanze 46 vorgenommen. Nach entsprechender Ausrichtung und Fixierung der zwei Deckschichten 20, 20' mit deren konkaven Oberflächen 28, 28' wiederum nach oben, wie in der Fig. 7 gezeigt, wird die Befüllungs- und Schaumdosierlanze 46 mit dem Lanzenkopf 48 gezielt in den Zwischenraum 22 zwischen den zwei Deckschichten 20, 20' eingeführt. Die Befüllungs-oder Dosierlanze 46 mit dem Lanzenkopf 48 wird dabei zunächst translatorisch bzw. radial in den Zwischenraum 24 bis etwa zu bzw. nahe der Mittelachse 52 bzw. des Pols der Deckschichten 20, 20' hineingeschoben. Über den Lanzenkopf 48 wird der Polymer-Schaum in den Zwischenraum 24 zwischen die konkave Oberfläche 28 der unteren Deckschicht 20 und der konvexen Oberfläche 28' der oberen Deckschicht 20 eingetragen.

Die Befüllungs- oder Dosierlanze 46 mit dem Lanzenkopf 48 führt gleichzeitig eine translatorische bzw. radiale und rotatorische Bewegung durch. Der Lanzenkopf 48 der Befüllungs-oder Dosierlanze 46 beschreibt hierdurch, wie in der Fig. 10 schematisch angedeutet ist, entweder eine archimedische Spirale oder konzentrische Kreise mit unterschiedlichen Radien.

Anfangspunkt dieser Spirale/Kreise ist die Mittelachse 52 bzw. der Pol der Deckschichten 20, 20'. Während der Einführung des Polymer-Schaumes wird der Zwischenraum 24 zwischen den zwei Deckschichten 20, 20' der Trennwand 14 wiederum vollständig befüllt. Sobald der Hohlraum vollständig ausgefüllt, der eingebrachte Polymer-Schaum somit an den Y-Ringen angelangt ist und gegebenenfalls sogar infolge der Reaktion entstandener, überschüssiger Polymer-Schaum über die Öffnung 54 im Rand- bzw. Umfangsbereich 34 in die Umgebung herausgedrückt und ausgetreten ist, ist der Füllvorgang beendet.

Als vorteilhaft hat sich bei diesem Verfahren in der Praxis herausgestellt, dass der entstehende Schaumdruck durch die Wahl der Prozessparameter (Rotatorische-/translatorische Geschwindigkeit der der Befüllungs- oder Dosierlanze 46, Temperatur der Deckschichten 20, 20', Ruhe- und Reaktionszeiten des Polymer-Schaumes etc.) nur lokal auftritt, womit die Spannvorrichtung 44 konstruktiv einfacher und leichtbauender ausgebildet werden kann.

### Verfahren 3

Ein drittes Verfahren nach der Erfindung gleicht dem zweiten Verfahren darin, dass dieses Verfahren ebenfalls auf einem Sprühprozess basiert.

Im Übrigen aber unterscheidet sich das dritte Verfahren nach der Erfindung von dem ersten und dem zweiten Verfahren dadurch, dass eine Zwischenschicht 22 aus Polymer-Schaum, welche mechanische Kräfte und/oder Momente übertragende und wärmeisolierende oder einen Wärmefluss reduzierende Eigenschaften aufweist, direkt auf, insbesondere durch Spinformen hergestellte, Deckschichten 20, 20' der Trennwand 14 des Behälters 10 aufgebracht oder aufgesprüht oder sonstwie aufgetragen wird. Der die Zwischenschicht 22 bildende Polymer-Schaum kann dabei wahlweise auf die konvexe Oberfläche 28 der unteren Deckschicht 20 der Trennwand 14 oder die konkave Oberfläche 28' der oberen Deckschicht 20' der Trennwand 14 aufgebracht etc. werden.

Nach dem Aushärten der aufgebrachten Zwischenschicht 22 aus Polymer-Schaum wird die ausgehärtete Zwischenschicht 22 zu deren Anpassung an die konkave Oberfläche 28' der oberen Deckschicht 20' der Trennwand 14 oder die konvexe Oberfläche 28 der unteren Deckschicht 20 der Trennwand 14 (ab)gefräst. Durch eine solche Fräsbearbeitung kann die Schaumoberfläche an die Kontur der unteren oder der oberen Deckschicht 20, 20' angepasst werden. Letztlich wird eine Verbindung von der Zwischenschicht aus Polymer-Schaum und Deckschichten 20, 20' durch eine Verklebung erzeugt. Eine Säuberung und/oder chemische Vorbehandlung der Deckschichten 20, 20', sofern diese bis dahin nicht stattgefunden hat, ließe sich ohne weiteres vor einer abschließenden Verklebung vorziehen.

Wird kein Sprühschaum oder in-situ-Schaum als Kernmaterial für die Zwischenschicht 22 verwendet, sondern wird zum Beispiel vorstehendes Verfahren durchgeführt oder kommen auch vorgefertigte Schaumelemente (nicht dargestellt) zum Einsatz, wird eine (Ver-)Klebung zwischen der bereits aufgebrachten Zwischenschicht 22 aus Polymer-Schaum oder den Schaumelementen und den Deckschichten 20, 20' bzw. Domschalen nötig. Da die Deckschichten 20, 20' eine endliche Formgenauigkeit aufweisen, kann der Klebstoff 67, insbesondere ein aufschäumender Klebstoff, vorzugsweise ein pastöser Kleber, Filmkleber oder Epoxidharz - sofern eine vorhergehende Fräsung nicht erfolgt ist - die vorhandenen Formtoleranzen zwischen den Deckschichten 20, 20' und Zwischenschicht 22 ausgleichen, um eine zuverlässige Verbindung zu gewährleisten.

Gegenstand des erfindungsgemäßen Verfahrens sind in diesem Zusammenhang auch nachfolgend erläuterte Ausführungsbeispiele, um den Klebstoff 67 auf der Zwischenschicht 22 aufzutragen bzw. aufzubringen oder in bzw. zwischen die Zwischenschicht 22 und die konkave Oberfläche 28' der oberen Deckschicht 20' und/oder der konvexen Oberfläche 28 der unteren Deckschicht 20 zu verbringen.

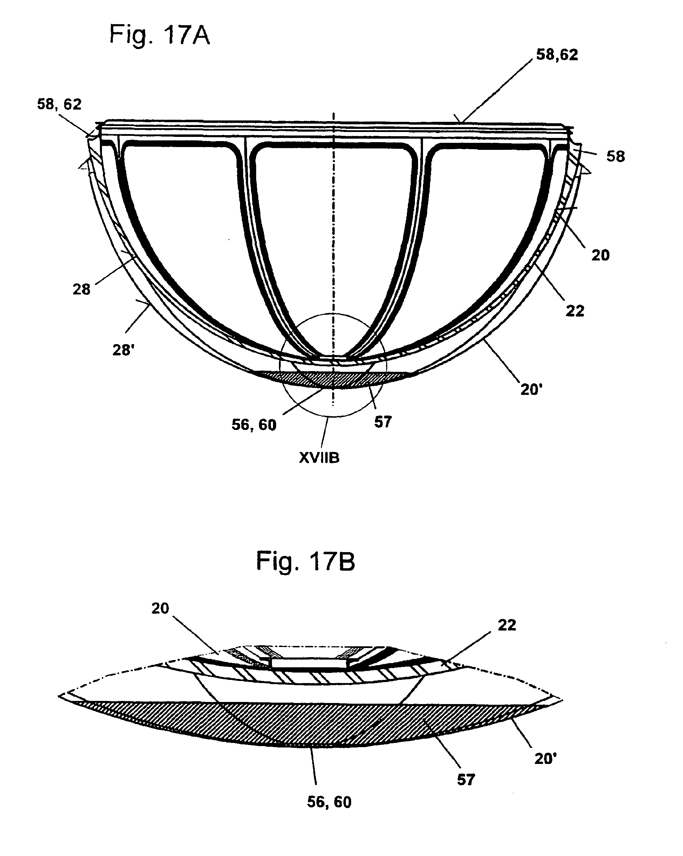

Entsprechend den Fig. 17A und 17B kann ein gleichmäßiges, toleranzausgleichendes Verfahren zur Verklebung der Deckschichten 20, 20' und der Zwischenschicht 22 durch Verdrängung eines zum Beispiel sehr dünnflüssigen Klebstoffs 67, wie ebenso zum Beispiel eines (hochviskosen) Epoxidharzes, erzielt werden. Die obere Deckschicht 20' wird in Schüssellage gebracht. Der Klebstoff 67 wird in die konkave Oberfläche 28' der oberen Deckschicht 20' in einen Bereich des Pols 56 bzw. Apex der oberen Deckschicht 20' eingefüllt. Dann wird die untere Deckschicht 20, die ebenfalls in Schlüssellage gebracht ist, mit der konvexen Oberfläche 28 mit der Zwischenschicht 22 abgesenkt. Die Absenkung führt zu einer gleichmäßigen Verteilung des Klebstoffs 67 in der Klebefuge bis hin zum Äquator 58 der zwei Deckschichten 20, 20', deren Höhe durch das gesteuerte Absenken der Zwischenschicht 22 bestimmt werden kann. Die zur Absenkung benötigte Kraft kann durch Einfüllen von zum Beispiel Wasser auf die konvexe Oberfläche 28' der oberen Deckschicht 20' erzeugt werden. Dieses Verfahren vermeidet aufwendige Werkzeuge und Einspannungen zur Aufbringung der benötigten Kräfte.

Ohne im Einzelnen dargestellt zu sein, ist es ebenso denkbar, eine Zwischenschicht 22 aus Polymer-Schaum als Schaumkernmaterial gesondert herzustellen und mit dem Schaumkernmaterial entsprechend zu verfahren. In diesem Fall wird abschließend noch in entsprechender Weise mit der in Schlüssellage gebrachten unteren Deckschicht 20, die mit der konvexen Oberfläche 28 auf die Zwischenschicht 22 abgesenkt wird, verfahren.

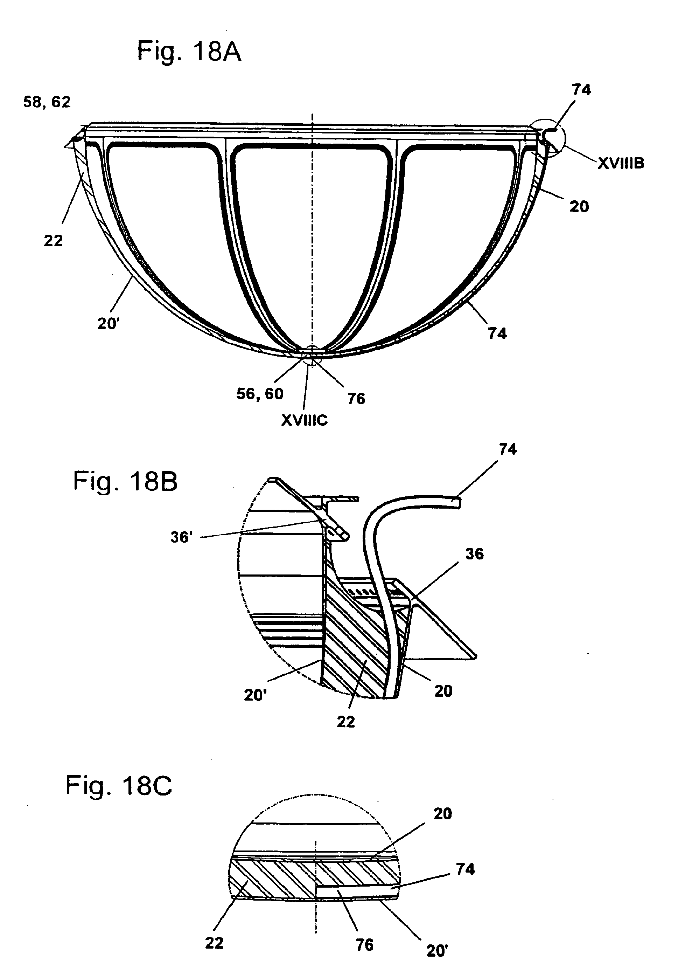

Weitere Ausführungsbeispiele des erfindungsgemäßen Verfahrens, die in den Fig. 18A bis 20 gezeigt sind, basieren auf einer (Ver-)Klebung mittels Injektion oder Infiltration des Klebstoffs 67.

Bei der Ausführungsform des erfindungsgemäßen Verfahrens nach den Fig. 18A bis 18C erfolgt eine Injektion des Klebstoffs 67, wie zum Beispiel eines (niedrig- oder hochviskosen) Epoxidharzes, über einen Schlauch 74, der in einer Vertiefung (nicht dargestellt) in der Zwischenschicht 22 angeordnet, geführt und gehalten ist. Durch den Schlauch 74 kann der Klebstoff 67 über das Ende 76 des Schlauches 74 direkt in den (Klebe-)Spalt bis hin zum Pol 56 bzw. der Mitte 60 eingespritzt·werden.

Die zwei Deckschichten 20, 20' mit der dazwischen angeordneten Zwischenschicht 22, die bei diesem Ausführungsbeispiel an der Oberfläche 28 der unteren Deckschicht 20 angebracht ist, befinden sich hierzu in einer Schüssellage, was dazu führt, dass alleine durch die Erdanziehung eine gleichmäßige Verteilung des Klebstoffs 67 in dem gesamten (Klebe-)Spalt erzielt wird. Auf diese Weise ist es ebenfalls möglich, das Toleranzmaß zwischen der Zwischenschicht 22 und den zwei Deckschichten 20, 20' bzw. der hier oberen Deckschicht 20' auszugleichen.

Dabei können Lufteinschlüsse weitestgehend vermieden werden. Dies ermöglicht eine besonders sichere und reproduzierbare (Ver-)Klebung. Bei Verwendung von niedrigviskosen und/oder entgasten Klebstoffen lässt sich die (Ver-)Klebung noch zusätzlich verbessern.

Nach Aushärten des Klebstoffs 67 kann der Schlauch 74 entweder als Verlustbauteil in der Zwischenschicht 22 verbleiben oder nach bzw. während der Injektion (kontinuierlich) entfernt werden.

Ohne im Einzelnen dargestellt zu sein, ist es ebenso möglich, anstelle eines Schlauches 74 mindestens eine Ausnehmung (nicht gezeigt) in der Zwischenschicht 22 vorzusehen, der vom Äquator 58 bzw. rand- bzw. umfangsseitigen Bereich 62 der zwei Deckschichten 20, 20' bis zum Pol 56 bzw. der Mitte 60 geführt ist. Der Klebstoff 67 würde mithin in der Zwischenschicht 22 selbst in unmittelbarem Kontakt dazu geführt. Dabei eignet sich ganz besonders ein (niedrigviskoser) Klebstoff 67, wie zum Beispiel ein (niedrigviskoses) Epoxidharz. Nachdem die Deckschichten 20, 20' gefügt wurden, wird der Klebstoff 67 in diese Ausnehmung eingefüllt bzw. injiziert. Unter dem Einfluss der Schwerkraft wird der Klebstoff 67 sodann an die dafür jeweils bestimmte Stelle oder - wie zuvor - dem Pol 56 bzw. der Mitte 60 auf der konkaven Oberfläche 28' der Deckschicht 20' zugeführt und breitet sich anschließend nach oben zum Äquator 58 hin aus.

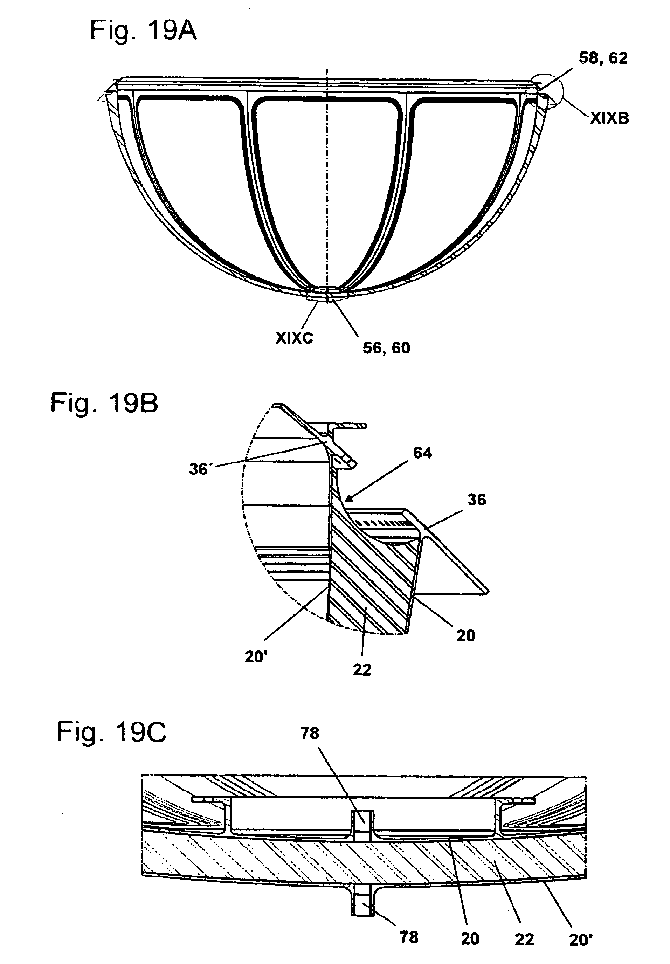

Bei der Ausführungsform des erfindungsgemäßen Verfahrens nach den Fig. 19A bis 19C erfolgt eine Injektion des Klebstoffs 67, wie zum Beispiel eines (niedrig- oder hochviskosen) Epoxidharzes, alternativ oder kumulativ dazu durch mindestens einen Kanal 78, der in der einen oder den zwei Deckschichten 20, 20' angeordnet ist. Bei dem Ausführungsbeispiel sind zwei Kanäle 78 am Pol 56 bzw. in der Mitte 60 der zwei Deckschichten 20, 20' vorgesehen. Auf einen gesonderten Schlauch 74 zur Injektion des Klebstoffs 67 in die Klebefuge kann somit verzichtet werden. Die Injektion kann bei einer in der Schüssellage fixierten oberen Deckschicht 20' stattfinden, um eventuelle Gaseinschlüsse zu verringern. Nach Beendigung der (Ver-)Klebung können die zwei Kanäle 78 durch Schweißen versiegelt werden. Wird der Klebstoff 67 durch mindestens einen Schlauch 74, eine Ausnehmung oder die Kanäle 78 in bzw. durch die Zwischenschicht 22 zu den Deckschichten 20, 20' injiziert, kann das Einströmen des Klebstoffes 67 forciert werden, indem es mit Überdruck beaufschlagt wird.

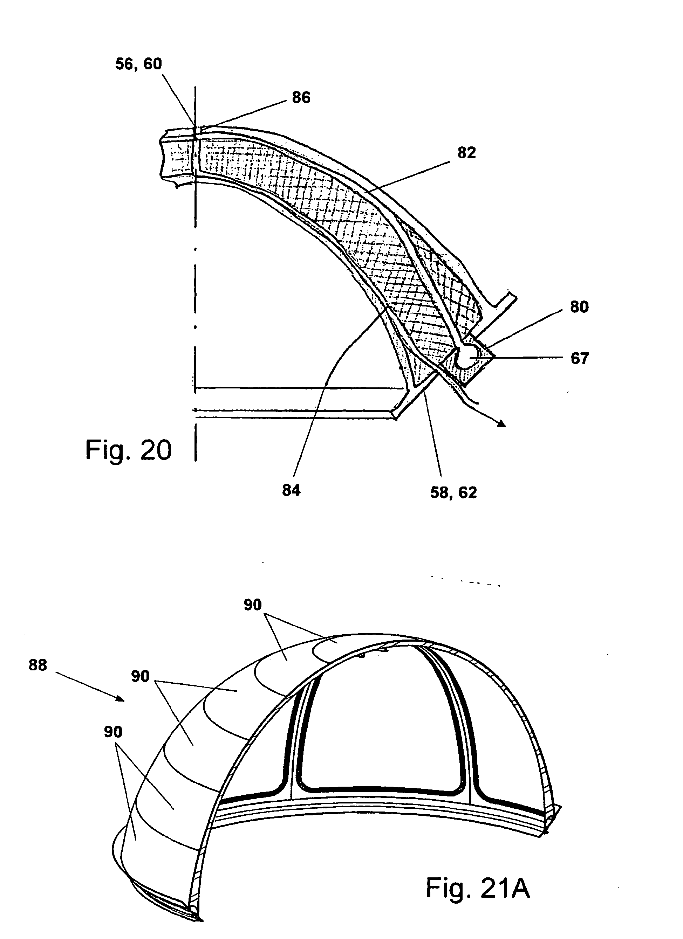

Die Ausführungsform des erfindungsgemäßen Verfahrens nach der Fig. 20 eignet sich in besonders vorteilhafter Weise bei Verwendung eines relativ dickflüssigen Klebstoffs 67, etwa Harzes. Eine Injektion/Infiltration am Pol 56 bzw. in der Mitte 60 der zwei Deckschichten 20, 20' ist in diesem Fall etwas ungünstig, weil höhere Fließgeschwindigkeiten in dem engen (Klebe-)Spalt erzielt werden müssen. Diese können nur durch genügend hohe Druckdifferenzen erzeugt werden, die jedoch wiederum dazu führen können, dass sich die zwei Deckschichten 20, 20' und/oder die Zwischenschicht 22 verformen. Durch Fortschreiten der Aushärtung des Klebstoffs 67 steigert sich im Laufe der Zeit dessen Viskosität und verlangsamt die Fließgeschwindigkeit. Möglicherweise härtet der Klebstoff 67 aus, bevor der (Klebe-)Spalt ganz gefüllt ist.

Entsprechend der Fig. 20 werden die zwei Deckschichten 20, 20' und/oder die Zwischenschicht 22 in Kuppellage gebracht. Am Äquator 58 wird umlaufend ein Ringkanal 80 angebracht, der zum (Klebe-)Spalt 82 hin offen ist und diesen abdichtet. In den Ringkanal 80 wird der Klebstoff 67 eingeleitet und steigt im (Klebe-)Spalt 82 nach oben. Dabei schiebt der Klebstoff 67 die Luft vor sich her zum Pol 56. Die Luft wird am höchsten Punkt abgeleitet. Dazu kann ein Schlauch 84 verwendet werden, der in die Zwischenschicht 22 eingelassen ist und verbleibt. Alternativ kann auch eine Bohrung 86 im Bereich des Pols 56 vorgesehen sein, die später durch Schweißen verschlossen wird. Um den Klebstoff 67 in den (Klebe-)Spalt 82 strömen zu lassen, wird eine Druckdifferenz aufgebaut. Der Klebstoff 67 wird zu diesem Zweck mit Druck beaufschlagt in den Ringkanal 80 eingeleitet. Alternativ oder kumulativ kann die Luft am Pol 56 abgesaugt werden (durch den Schlauch 84 oder die Bohrung 86).

Der Druckbeaufschlagung ist dabei der Vorzug zu geben, weil Leckagen nicht zu Lufteintritten in den (Klebe-) Spalt 82 führen, sondern zu Klebstoffaustritten. Diese können leicht festgestellt und abgedichtet werden. Außerdem beeinträchtigt ein Klebstoffaustritt nicht unmittelbar die Qualität der (Ver-)Klebung.

Nachdem der Klebstoff 67 ausgehärtet ist, wird der Ringkanal 80 entfernt und der Schlauch 84 abgeschnitten.

Der Klebstoff 67, der auf die Zwischenschicht 22 aufgebracht oder in bzw. durch die Zwischenschicht 22 hin zu den zwei Deckschichten 20, 20' injiziert oder infiltriert wurde, kann anschließend durch eine vollflächige oder lokale Wärmebehandlung bzw. Erwärmung zur Reaktion/zum Aufschäumen gebracht werden. Eine solche Erwärmung wird bevorzugt bei der Verwendung von aufschäumenden Klebern, Filmklebern oder Kleberfolien durchgeführt.

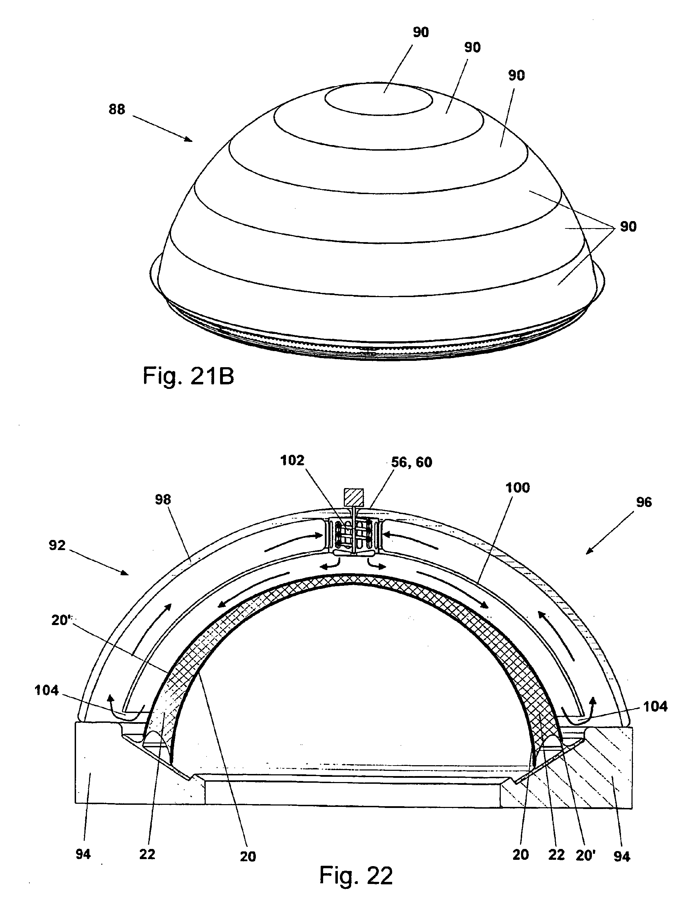

Eine vollflächige Wärmebehandlung erfolgt zum Beispiel im Ofen oder durch eine Einrichtung 88 von beheizbaren Matten 90, wie in den Fig. 21A und 21B dargestellt. Sämtlich beheizbaren Matten 90 befinden sich in Betrieb.

Eine Einrichtung 88 von beheizbaren Matten 90 bringt den zusätzlichen Vorteil mit sich, dass eine Erwärmung und die daraus resultierende Reaktion des Klebstoffs 67 und/oder der Zwischenschicht 22 selbst gleichzeitig über der gesamten Klebefläche oder lokal begrenzt und somit sequentiell erzielt werden kann. Durch eine sequentielle, lokale Erwärmung des Klebesystems zum Beispiel ausgehend vom Pol 56 in Richtung des Äquators 58 können Lufteinschlüsse im (Klebe-)Spalt ausgetrieben werden, da sie vor der reagierenden Schaumfront hergeschoben werden. Die Verringerung der Lufteinschlüsse bzw. der Blasenbildung im (Klebe-)Spalt führt zu einer deutlichen Steigerung der Belastbarkeit des erfindungsgemäßen Behälters 10 insgesamt. Je nach Verwendung kann die Einrichtung 88 somit durch die gleichzeitige Inbetriebnahme von sämtlichen beheizbaren Matten 90 zur gleichzeitigen Erwärmung des gesamten Doms oder durch sequentielle Inbetriebnahme von ausgewählten beheizbaren Matten 90 zur lokalen Erwärmung des Doms eingesetzt werden.

Eine Steuerung des Temperaturverlaufs in Abhängigkeit der Aushärtungsgeschwindigkeit des Klebstoffs 67 und/oder der Zwischenschicht 22 ermöglicht zudem eine deutliche Reduktion der eingeschlossenen Gasblasen und somit eine sichere reproduzierbare Klebequalität.

Wie aus der Fig. 22 ersichtlich, kann eine sequentielle Erwärmung des Klebstoffs 67 und/oder der Zwischenschicht 22 aus Polymer-Schaum auch durch eine Umluftgebläseeinrichtung 92 am Pol 56 erreicht werden. Die Deckschichten 20, 20' und die Zwischenschicht 22 werden zunächst durch Halteringe 94 in ihrer gewünschten Endposition gefügt. Sodann wird eine doppelwandige Haube 96 darüber gestülpt, deren Außenwand 98 isoliert ist und dicht mit dem Haltering 94 abschließt. Eine Innenwand 100 ist in einem definierten Abstand zwischen der oberen Deckschicht 20' und der Außenwand 98 montiert. Ein leistungsstarker Heizlüfter 102 im Bereich des Pols 56 bläst heiße Luft zwischen die obere Deckschicht 20' und die Innenwand 100. Die Luft strömt zum Äquator 58 der oberen Deckschicht 20' hinab, erwärmt diese und kühlt dabei ab. Durch einen Spalt 106 zwischen der Außenwand 98 und der Innenwand 100 strömt die Luft zurück zum Heizlüfter 102. Durch den Heizlüfter 102 wird die Luft nur auf die Temperatur erwärmt, die erforderlich ist, um den Klebstoff 67 bzw. die Zwischenschicht 22 zur Reaktion zu bringen. So kann eine Überhitzung sicher ausgeschlossen werden. Da die warme Luft am Pol 56 eingeleitet wird, beginnt die Reaktion des Klebstoffs 67 hier zuerst. Die Luft im (Klebe-)Spalt wird herausgedrückt, wenn die Reaktionsfront auf den Äquator 58 zuwandert. Durch die Konstruktion der Umluftgebläseeinrichtung ist die sequentielle Erwärmung des Klebstoffs selbstregelnd und sind keine weiteren Regeleinrichtungen erforderlich. Je nach thermischer Kapazität der Deckschichten 20, 20' bzw. der Zwischenschicht 22 und der Innenwand 100 erfolgt die Ausbreitung der Wärme unterschiedlich schnell, kann also wunschgemäß angepasst werden. Auch durch unterschiedliche Strömungsgeschwindigkeit der Luft kann der Verlauf der Härtung beeinflusst werden.

Die vorliegende Erfindung ist nicht auf die dargestellte Ausführungsformen des Behälters 10 und der dazugehörigen Verfahren zu dessen Herstellung beschränkt. So ist es ohne weiteres denkbar, als Polymer-Schaum einen offen- oder geschlossenporigen Polymer-Schaum und in ganz vorteilhafter Weise einen Polyurethan-Schaum als Zwischenschicht 22 der Trennwand 14 bzw. zu deren Herstellung einzusetzen. Darüber hinaus ist es möglich, die Deckschichten 20, 20' der Trennwand 14 des Behälters 10 nach der Erfindung als Domschalen bzw. Tankboden von Raketen-Treibstofftanks oder Satellitentanks einzusetzen. Weiterhin ist es jederzeit und ohne jede Einschränkung möglich, einen oder mehrere der einzelnen Schritte der erfindungsgemäßen Verfahren in einer von der beschriebenen Reihenfolge abweichenden Reihenfolge durchzuführen. Gleichwohl die Einrichtung 88 von beheizbaren Matten 90 und die Umluftgebläseeinrichtung 92 im Zusammenhang mit der Wärmebehandlung des Klebstoffs 67 erläutert wurden, ist es ersichtlich, dass diese Einrichtungen 88, 92 ohne weiteres auch zur Reaktion/Aushärtung der Zwischenschicht 22 aus Polymer-Schaum selbst verwendbar sind.

## Patentansprüche

1. Behälter zum Aufnehmen und Speichern von kryogenen Fluiden, insbesondere von kryogenen Flüssigkeiten und viskosen Stoffen, mit einem Mantel (12) und mindestens einer Trennwand (14), welche den Innenraum (16) des Behälters (10) in wenigstens zwei einander benachbarte Kammern (18, 18') unterteilt, **dadurch gekennzeichnet, dass** die mindestens eine Trennwand (14) in Sandwichbauweise ausgebildet ist und zwei jeweils einer der wenigstens zwei einander benachbarten Kammern (18, 18') zugewandte Deckschichten (20, 20') sowie eine in einem Zwischenraum (24) zwischen den zwei Deckschichten (20, 20') angeordnete, mechanische Kräfte und/oder Momente übertragende und wärmeisolierende oder einen Wärmefluss reduzierende Zwischenschicht (22) aus Polymer-Schaum umfasst, wobei die mechanische Kräfte und/oder Momente übertragende und wärmeisolierende oder einen Wärmefluss reduzierende Zwischenschicht (22) aus Polymer-Schaum den Zwischenraum (24) zwischen den zwei Deckschichten (20, 20') vollständig oder im Wesentlichen vollständig ausfüllt und mit den zwei Deckschichten (20, 20') haftend verbunden ist.

2. Behälter nach Anspruch 1, **dadurch gekennzeichnet, dass** die mechanische Kräfte und/oder Momente übertragende und wärmeisolierende oder einen Wärmefluss reduzierende Zwischenschicht (22) aus Polymer-Schaum eine von der Mitte ( 56; 60) hin zu einem rand- bzw. umfangsseitigen Bereich (58; 62) der zwei Deckschichten (20, 20') kontinuierlich zunehmende Dicke aufweist.

3. Behälter nach Anspruch 1 oder 2, **dadurch gekennzeichnet, dass** die mechanische Kräfte und/oder Momente übertragende und wärmeisolierende oder einen Wärmefluss reduzierende Zwischenschicht (22) aus Polymer-Schaum im rand- bzw. umfangsseitigen Bereich (58; 60) der zwei Deckschichten (20, 20') mit einer Ausnehmung (64) oder Aussparung und zwei durch die Ausnehmung (64) oder Aussparung gebildeten Übergangsbereichen (66, 66') von abnehmender Form und/oder Dicke, die jeweils an einer der Deckschichten (20, 20') befestigt sind, versehen ist.

4. Behälter nach einem der Ansprüche 1 bis 3, **dadurch gekennzeichnet, dass** die mechanische Kräfte und/oder Momente übertragende und wärmeisolierende oder einen Wärmefluss reduzierende Zwischenschicht (22) aus einem offen- oder geschlossenporigen Polymer-Schaum, insbesondere aus Polyurethan-Schaum, gebildet ist.

5. Behälter nach einem der Ansprüche 1 bis 4, **dadurch gekennzeichnet, dass** die mechanische Kräfte und/oder Momente übertragende und wärmeisolierende oder einen Wärmefluss reduzierende Zwischenschicht (22) mit den zwei Deckschichten (20, 20') mittels eines Klebstoffs (67), insbesondere eines aufschäumenden Klebstoffs, vorzugsweise eines pastösen Klebers, Filmklebers oder Epoxidharzes, haftend verbunden ist.

6. Behälter nach einem der Ansprüche 1 bis 5, **dadurch gekennzeichnet, dass** die Trennwand (14) ein separates und die zwei jeweils einer der wenigstens zwei einander benachbarten Kammern (18, 18') zugewandte Deckschichten (20, 20') miteinander verbindendes Verbindungselement (32) umfasst, wobei das Verbindungselement (32) der Trennwand (14) insbesondere den Zwischenraum (24) zwischen den zwei Deckschichten (20, 20') rand- bzw. umfangsseitig begrenzt.

7. Behälter nach Anspruch 6, **dadurch gekennzeichnet, dass** das Verbindungselement (32) der Trennwand (14) an den zwei Deckschichten (20, 20') der Trennwand (14) mittelbar über zwei etwa Y-förmige, insbesondere steife oder mit Versteifungsrippen (68) ausgesteifte, und an dem Mantel (12) des Behälters (10) angebrachte Ringelemente (36, 36') befestigt ist oder unmittelbar oder an den zwei etwa Y-förmigen Ringelementen (36, 36') oder den zwei Deckschichten (20, 20') der Trennwand (14) über eine Bolzenverbindung (38), ohne oder unter Zwischenanordnung von Dopplerelementen (70), befestigt ist.

8. Behälter nach Anspruch 6 oder 7, **dadurch gekennzeichnet, dass** das Verbindungselement (32) der Trennwand (14) aus einem hochfesten Material mit niedriger Wärmeleitfähigkeit, insbesondere aus Metall, insbesondere aus Stahl, Edelstahl, Aluminium, Titan, einer Legierung daraus und/oder einer Kombination daraus, gebildet ist.

9. Behälter nach einem der Ansprüche 6 bis 8, **dadurch gekennzeichnet, dass** das Verbindungselement (32) der Trennwand (14) außenseitig durch einen Überzug (42), insbesondere eine Folie aus Metall, gesondert abgedichtet ist.

10. Behälter nach einem der Ansprüche 1 bis 9, **dadurch gekennzeichnet, dass** die zwei jeweils einer der wenigstens zwei einander benachbarten Kammern (18, 18') zugewandten Deckschichten (20, 20') der Trennwand (14) durch Spinformen hergestellt sind.

11. Behälter nach einem der Ansprüche 1 bis 10, **dadurch gekennzeichnet, dass** der Behälter (10), insbesondere der Mantel (12) und die etwa Y-förmigen Ringelemente (36, 36') des Behälters (10), leichtbauend ausgebildet ist/sind, insbesondere aus Metall, insbesondere aus Stahl, Edelstahl, Aluminium, Titan, einer Legierung daraus und/oder einer Kombination daraus, gebildet ist/sind.

12. Verfahren zum Herstellen eines Behälters zum Aufnehmen und Speichern von kryogenen Fluiden, insbesondere von kryogenen Flüssigkeiten und viskosen Stoffen, mit einem Mantel (12) und mindestens einer Trennwand (14), welche den Innenraum (16) des Behälters (10) in wenigstens zwei einander benachbarte Kammern (18, 18') unterteilt, insbesondere nach einem der Ansprüche 1 bis 11, umfassend folgende Schritte:
a) Herstellen von zwei jeweils einer der wenigstens zwei einander benachbarten Kammern (18, 18') zugewandten, schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildeten Deckschichten (20, 20') der Trennwand (14),
b) Ausrichten der zwei Deckschichten (20, 20') der Trennwand (14) zueinander und mit deren konkaven Oberflächen (28, 28') nach oben,
c) Fixieren der zwei Deckschichten (20, 20') der Trennwand (14) zueinander,
d) Einbringen einer mechanische Kräfte und/oder Momente übertragenden und wärmeisolierenden oder einen Wärmefluss reduzierenden Zwischenschicht (22) aus Polymer-Schaum in einen Zwischenraum (24) zwischen den zwei Deckschichten (20, 20') der Trennwand (14) mittels einer Befüllungs- oder Dosierlanze (46), und
e) Aushärten der in den Zwischenraum (24) zwischen den zwei Deckschichten (20, 20') der Trennwand (14) eingebrachten Zwischenschicht (22) aus Polymer-Schaum.

13. Verfahren zum Herstellen eines Behälters zum Aufnehmen und Speichern von kryogenen Fluiden, insbesondere von kryogenen Flüssigkeiten und viskosen Stoffen, mit einem Mantel (12) und mindestens einer Trennwand (14), welche den Innenraum (16) des Behälters (10) in wenigstens zwei einander benachbarte Kammern (18, 18') unterteilt, insbesondere nach einem der Ansprüche 1 bis 11, umfassend folgende Schritte:
a) Herstellen von zwei jeweils einer der wenigstens zwei einander benachbarten Kammern (18, 18') zugewandten, schalenförmig, insbesondere halbkugelförmig, kugelkappenförmig, kalottenförmig, ellipsoidkallotenförmig, konisch, elliptisch, in Cassini-Form oder mit anderen Querschnittsformen ausgebildeten Deckschichten (20, 20') der Trennwand (14),
b) Aufbringen oder Aufsprühen einer mechanische Kräfte und/oder Momente übertragenden und wärmeisolierenden oder einen Wärmefluss reduzierenden Zwischenschicht (22) aus Polymer-Schaum auf die konvexe Oberfläche (28) der unteren Deckschicht (20) der Trennwand (14) oder die konkave Oberfläche (28') der oberen Deckschicht (20') der Trennwand (14),
c) Aushärten der auf die konvexe Oberfläche (28) der unteren Deckschicht (20) der Trennwand (14) oder die konkave Oberfläche (28') der oberen Deckschicht (20') aufgebrachten oder aufgesprühten Zwischenschicht (22) aus Polymer-Schaum,
d) Ausrichten und Fixieren der zwei Deckschichten (20, 20') der Trennwand (14) zueinander, oder
e) Auftragen eines Klebstoffs (67), insbesondere eines aufschäumenden Klebstoffs, vorzugsweise eines pastösen Klebers, Filmklebers oder Epoxidharzes, auf die Deckschicht (20, 20') der Trennwand (14) und/oder auf die konkave Oberfläche (28') der oberen Deckschicht (20') der Trennwand (14) oder die konvexe Oberfläche (28) der unteren Deckschicht (20) der Trennwand (14), und
f) Ausrichten und Fixieren der zwei Deckschichten (20, 20') der Trennwand (14) zueinander zum Aushärten des Klebstoffs (67).

14. Verfahren nach Anspruch 13, **dadurch gekennzeichnet, dass** zusätzlicher Klebstoff (67), insbesondere aufschäumender Klebstoff, vorzugsweise pastöser Kleber, Filmkleber oder Epoxidharz, zwischen die ausgehärtete Zwischenschicht (22) der Trennwand (14) und die konkave Oberfläche (28') der oberen Deckschicht (20') der Trennwand (14) oder die konvexe Oberfläche (28) der unteren Deckschicht (20) der Trennwand (14) zu deren Toleranzausgleich eingebracht wird.

15. Verfahren nach einem der Ansprüche 12 bis 14, **dadurch gekennzeichnet, dass** die zwei Deckschichten (20, 20') der Trennwand (14) gemäß Schritt a) durch Spinformen hergestellt werden.

16. Verfahren nach einem Ansprüche 12 bis 15, **dadurch gekennzeichnet, dass** ein offen- oder geschlossenporiger Polymer-Schaum als Zwischenschicht (22) aus Polymer-Schaum in den Zwischenraum (24) zwischen den zwei Deckschichten (20, 20') der Trennwand (14) eingebracht oder auf die konvexe Oberfläche (28) der unteren Deckschicht (20) der Trennwand (14) oder die konkave Oberfläche (28') der oberen Deckschicht (20') der Trennwand (14) aufgebracht oder aufgesprüht wird.

17. Verfahren nach einem der Ansprüche 12 bis 16, **dadurch gekennzeichnet, dass** ein Polyurethan-Schaum als Zwischenschicht (22) aus Polymer-Schaum in den Zwischenraum (24) zwischen den zwei Deckschichten (20, 20') der Trennwand (14) eingebracht oder auf die konvexe Oberfläche (28) der unteren Deckschicht (20) der Trennwand (14) oder die konkave Oberfläche (28') der oberen Deckschicht (20') der Trennwand (14) aufgebracht oder aufgesprüht wird.

18. Verwendung eines Behälters nach einem der vorhergehenden Ansprüche zum Aufnehmen und Speichern von Flüssigkeiten und viskosen Stoffen, insbesondere von kryogenen Fluiden, vorzugsweise von Sauerstoff und Wasserstoff, in Fahrzeugen, insbesondere in Luftfahrzeugen oder Fluggeräten der Luft-und Raumfahrt, vorzugsweise in Flugzeugen und Raumflugkörpern, insbesondere in Wasserfahrzeugen, vorzugsweise in einem U-Boot oder Luftkissenfahrzeug (Hovercraft), oder insbesondere in Landfahrzeugen, vorzugsweise in einem Personenkraftwagen, Lastkraftwagen oder Wohnmobil, insbesondere zum Aufnehmen und Speichern von Flüssigkeiten und viskosen Stoffen, insbesondere von kryogenen Fluiden, für Raketen-Treibstofftanks oder Satellitentanks.

## Claims

1. Container for receiving and storing cryogenic fluids, particularly cryogenic liquids and viscous substances, that container having a casing (12) and at least one bulkhead (14) dividing the internal space (16) of the container (10) into at least two adjacent chambers (18, 18'), **characterized in that** the at least one bulkhead (14) has a sandwich-type structure and comprises two covering layers (20, 20') each facing one of the at least two adjacent chambers (18, 18') as well as an heat-insulating or heat flux reducing, mechanical forces or torques transmitting intermediate layer (22) consisting of polymer foam and arranged in an interspace (24) between the two covering layers (20, 20'), whereby the mechanical forces or torques transmitting and heat insulating or heat flux reducing intermediate layer (22) of polymer foam completely or essentially completely fills the interspace (24) between the two covering layers (20, 20') and is adhesively bonded to the two covering layers (20, 20').

2. Container according to claim 1, **characterized in that** the heat-insulating or heat flux reducing, mechanical forces or torques transmitting intermediate layer (22) of polymer foam has a thickness continually increasing from the center (56; 60) to a border or peripheral area (58; 62) of the two covering layers (20, 20').

3. Container according to claim 1 or 2, **characterized in that** the heat-insulating or heat flux reducing, mechanical forces or torques transmitting intermediate layer (22) of polymer foam in the border or peripheral area (58; 60) of the two covering layers (20, 20') is provided with a recess (64) or notch and two transitional areas (66, 66') formed by the recess (64) or notch of decreasing shape and/or thickness, each fastened at one of the covering layers (20, 20').

4. Container according to one of claims 1 to 3, **characterized in that** the heat-insulating or heat flux reducing, mechanical forces or torques transmitting intermediate layer (22) is of an open-cell or closed-cell polymer foam, particularly of polyurethane foam.

5. Container according to one of claims 1 to 4, **characterized in that** the heat-insulating or heat flux reducing, mechanical forces or torques transmitting intermediate layer (22) is adhesively bonded to the two covering layers (20, 20') by means of an adhesive (67), especially an effervescence adhesive, preferably a pasty adhesive, a film adhesive or an epoxy resin.

6. Container according to one of claims 1 to 5, **characterized in that** the bulkhead (14) comprises a discrete connecting element (32) connecting the two covering layers (20, 20') each facing one of the at least two adjacent chambers (18, 18'), whereby the connecting element (32) of the bulkhead (14) particularly borders the interspace (24) between the two covering layers (20, 20'9 at a border or peripheral side.

7. Container according to claim 6, **characterized in that** the connecting element (32) of the bulkhead (14) is fastened at the two covering layers (20, 20') of the bulkhead (14) indirectly via two about Y-shaped ring elements (36, 36'), particularly being stiff or stiffened with stiffening ribs (68), the ring elements (36, 36') being arranged at the casing (12) of the container (10), whereby the connecting element (32) of the bulkhead (14) particularly is fastened at the two covering layers (20, 20') of the bulkhead (14) directly or at the two about Y-shaped ring elements (36, 36') or the two covering layers (20, 20') of the bulkhead (14) by means of a pin joint (38), with or without insertion of doubling elements (70).

8. Container according to claims 6 or 7, **characterized in that** the connecting element (32) of the bulkhead (14) is formed of a material with high strength and low thermal conductivity, particularly of metal, particularly of steel, stainless steel, aluminium, titanium, an alloy thereof and/or a combination thereof.

9. Container according to one of claims 6 to 8, **characterized in that** the connecting element(32) of the bulkhead (14) is separately sealed on the outer side by means of a coating (42), particularly a metal foil.

10. Container according to one of claims 1 to 9, **characterized in that** the two covering layers (20, 20') of the bulkhead (14) each facing one of the two adjacent chambers (18, 18') are produced by spin forming.

11. Container according to one of claims 1 to 10, **characterized in that** the container (10), particularly the casing (12) and the Y-shaped ring elements (36, 36') of the container (10), is/are built in lightweight construction, particularly of metal, particularly steel, stainless steel aluminium, titanium, an alloy thereof and/or a combination thereof.

12. Method for producing a container for receiving and storing cryogenic fluids, particularly cryogenic liquids and viscous substances, having a casing (12) and at least one bulkhead (14), dividing the inner space (16) of the container (10) into at least two chambers (18, 18') adjacent to each other, particularly according to one of claims 1 to 11, comprising the following steps:
a) producing the two covering layers (20, 20') of the bulkhead (14) each facing one of the at least two adjacent chambers (18, 18') with cross-sections in the form of shells, hemispheres, spherical caps, calottes, ellipsoidal calottes, chuck-cones, ellipsis, in Cassini or other shapes,
b) aligning the two covering layers (20, 20') of the bulkhead (14) to each other and with their concave surfaces (28, 28') in upward direction,
c) fixing the two covering layers (20, 20') of the bulkhead (14) to each other,
d) inserting a mechanical forces or torques transmitting and heat insulating or heat flux reducing intermediate layer (22) of polymer foam into an interspace (24) between the two covering layers (20, 20') of the bulkhead (14) by means of an injection or dosaging lance(46), and
e) curing the intermediate layer (22) of polymer foam inserted into the interspace (24) between the two covering layers (20, 20') of the bulkhead (14).

13. Method for producing a container for receiving and storing cryogenic fluids, particularly cryogenic liquids and viscous substances, having a casing (12) and at least one bulkhead (14), dividing the inner space (16) of the container (10) into at least two chambers (18, 18') adjacent to each other, particularly according to one of claims 1 to 11, comprising the following steps:
a) producing the two covering layers (20, 20') of the bulkhead (14) each facing one of the at least two adjacent chambers (18, 18') with cross-sections in the form of shells, hemispheres, spherical caps, calottes, ellipsoidal calottes, chuck-cones, ellipsis, in Cassini or other shapes,
b) applying or spraying a mechanical forces or torques transmitting and heat insulating or heat flux reducing intermediate layer (22) of polymer foam onto the convex surface (28) of the lower covering layer (20) of the bulkhead (14) or the concave surface (28') of the upper covering layer (20') of the bulkhead (14),
c) curing the mechanical forces or torques transmitting and heat insulating or heat flux reducing intermediate layer (22) of polymer foam applied or sprayed onto the convex surface (28) of the lower covering layer (20) of the bulkhead (14) or the concave surface (28') of the upper covering layer (20') of the bulkhead (14),
d) aligning and fixing the two covering layers (20, 20') of the bulkhead (14) to each other, or
e) applying an adhesive (67), particularly an effervescence adhesive, preferably a pasty adhesive, a film adhesive or an epoxy resin onto the covering layer (20, 20') of the bulkhead (14) and/or onto the concave surface (28') of the upper covering layer (20') of the bulkhead (14) or onto the convex surface (28) of the lower covering layer (20) of the bulkhead (14), and
f) aligning and fixing the two covering layers (20, 20') of the bulkhead (14) to each other for curing the adhesive (67).

14. Method according to claim 13, **characterized in that** additional adhesive (67), particularly an effervescence adhesive, preferably a pasty adhesive, a film adhesive or an epoxy resin is inserted between the cured intermediate layer (22) of the bulkhead (14) and the concave surface (28') of the upper covering layer (20') of the bulkhead (14) or the convex surface (28) of the lower covering wall (20) of the bulkhead (14) to compensate the tolerance.

15. Method according to one of claims 12 to 14, **characterized in that** the two covering layers (20, 20') of the bulkhead (14) according to step a) are produced by spin forming.

16. Method according to one of claims 12 to 15, **characterized in that** as the intermediate layer (22) an open-cell or closed-cell polymer foam is inserted into the interspace (24) between the two covering layers (20, 20') of the bulkhead (14) or applied or sprayed onto the convex surface (28) of the lower covering layer (20) of the bulkhead (14) or the concave surface (28') of the upper surface (20') of the bulkhead (14).

17. Method according to one of claims 12 to 16, **characterized in that** as the intermediate layer (22) of polymer foam a polyurethane foam is inserted into the interspace (24) between the two covering layers (20, 20') of the bulkhead (14) or applied or sprayed onto the convex surface (28) of the lower covering layer (20) of the bulkhead (14) or the concave surface (28') of the upper surface (20') of the bulkhead (14).

18. Use of a container according to one of the preceding claims for receiving and storing liquids and viscous substances, particularly cryogenic fluids, preferably oxygen and hydrogen, in vehicles, particularly in aerodynes or aircraft for application in aeronautics, preferably in aeroplanes and space aerodynes, particularly in water vehicles, preferably in a submarine or air cushion craft (Hovercraft), or particularly in land vehicles, preferably in a passenger vehicle, truck or caravan, particularly for receiving and storing of liquids and viscous substances, particularly of cryogenic fluids, for rocket propellant tanks and satellite tanks.

## Revendications

1. Récipient destiné à recevoir et à stocker des fluides cryogéniques, en particulier des liquides cryogéniques et des matières visqueuses, comprenant une enveloppe (12) et au moins une paroi de séparation (14) qui subdivise le volume intérieur (16) du récipient (10) en au moins deux chambres (18, 18') mutuellement voisines, **caractérisé en ce que** ladite au moins une paroi de séparation (14) est réalisée en construction de type sandwich et comprend deux couches de recouvrement (20, 20') respectivement tournées vers l'une desdites au moins deux chambres (18, 18') mutuellement voisines ainsi qu'une couche intermédiaire (22), en mousse de polymère, agencée dans un intervalle (24) entre les deux couches de recouvrement (20, 20'), qui transmet des forces mécaniques et/ou des couples et à effet d'isolation thermique ou de réduction du flux de chaleur, ladite couche intermédiaire (22) en mousse de polymère qui transmet les forces mécaniques et/ou les couples et à effet d'isolation thermique ou de réduction des flux de chaleur remplit entièrement ou sensiblement entièrement l'intervalle (24) entre les deux couches de recouvrement (20, 20') et est reliée par adhésion avec les deux couches de recouvrement (20, 20').

2. Récipient selon la revendication 1, **caractérisé en ce que** la couche intermédiaire (22) en mousse de polymère qui transmet les forces mécaniques et/ou les couples et à effet d'isolation thermique ou de réduction du flux de chaleur présente une épaisseur qui augmente en continu depuis le milieu (56; 60) jusque dans une zone de bordure ou de périphérie (58; 62) des deux couches de recouvrement (20, 20').

3. Récipient selon la revendication 1 ou 2, **caractérisé en ce que** la couche intermédiaire (22) en mousse de polymère qui transmet les forces mécaniques et/ou les couples et à effet d'isolation thermique ou de réduction du flux de chaleur est dotée, dans la zone de bordure ou de périphérie (58; 60) des deux couches de recouvrement (20, 20'), d'un évidement (64) ou d'une échancrure et de deux zones de transition (66, 66') formées par l'évidement (64) ou l'échancrure avec une forme et/ou une épaisseur en diminution, qui sont respectivement fixées à l'une des couches de recouvrement (20, 20').

4. Récipient selon l'une des revendications 1 à 3, **caractérisé en ce que** la couche intermédiaire (22) qui transmet les forces mécaniques et/ou les couples et à effet d'isolation thermique ou de réduction du flux de chaleur est formée d'une mousse de polymère à pores ouvertes ou fermées, en particulier en mousse de polyuréthane.

5. Récipient selon l'une des revendications 1 à 4, **caractérisé en ce que** la couche intermédiaire (22) qui transmet les forces mécaniques et/ou les couples et à effet d'isolation thermique ou de réduction du flux de chaleur est reliée par adhésion avec les deux couches de recouvrement (20, 20') au moyen d'une colle (67), en particulier d'une colle à effet moussant, de préférence une colle pâteuse, une colle en film ou une résine époxy.

6. Récipient selon l'une des revendications 1 à 5, **caractérisé en ce que** la paroi de séparation (14) comprend un élément de liaison (32) qui est séparé et relie l'une à l'autre les deux couches de recouvrement (20, 20') tournées respectivement vers l'une desdites au moins deux chambres (18, 18') mutuellement voisines, ledit élément de liaison (32) de la paroi de séparation (14) délimitant en particulier du côté de la bordure ou de la périphérie l'intervalle (24) entre les deux couches de recouvrement (20, 20').

7. Récipient selon la revendication 6, **caractérisé en ce que** l'élément de liaison (32) de la paroi de séparation (14) est fixé aux deux couches de recouvrement (20, 20') de la paroi de séparation (14) indirectement via deux éléments annulaires (36, 36') approximativement en forme de Y, en particulier rigides ou rigidifiés avec des nervures de rigidification (68) et montés sur l'enveloppe (12) du récipient (10), ou est fixé aux deux couches de recouvrement (20, 20') de la paroi de séparation (14) directement ou aux deux éléments annulaires (36, 36') approximativement en forme de Y, ou aux deux couches de recouvrement (20, 20') de la paroi de séparation (14) via une liaison boulonnée (38) avec ou sans interposition d'éléments de renforcement (70).

8. Récipient selon la revendication 6 ou 7, **caractérisé en ce que** l'élément de liaison (32) de la paroi de séparation (14) est réalisé en un matériau à haute résistance avec une faible conductivité thermique, en particulier en métal, en particulier en acier, acier inoxydable, aluminium, titane, un alliage de ceux-ci, et/ou une combinaison de ceux-ci.

9. Récipient selon l'une des revendications 6 à 8, **caractérisé en ce que** l'élément de liaison (32) de la paroi de séparation (14) est étanché séparément du côté extérieur par un revêtement (42), en particulier une feuille en métal.

10. Récipient selon l'une des revendications 1 à 9, **caractérisé en ce que** les deux couches de recouvrement (20, 20') de la paroi de séparation (14), respectivement tournées vers l'une desdites au moins deux chambres (18, 18') mutuellement voisines sont produites par moulage-centrifugation.

11. Récipient selon l'une des revendications 1 à 10, **caractérisé en ce que** le récipient (10), en particulier l'enveloppe (12) et les éléments annulaires approximativement en forme de Y (36, 36') du récipient (10), est/sont réalisés en construction légère, en particulier en métal, en particulier en acier, acier inoxydable, aluminium, titane, un alliage de ceux-ci et/ou une combinaison de ceux-ci.

12. Procédé pour la fabrication d'un récipient destiné à recevoir et à stocker des fluides cryogéniques, en particulier des liquides cryogéniques et des matières visqueuses, comprenant une enveloppe (12) et au moins une paroi de séparation (14) qui subdivise le volume intérieur (16) du récipient (10) en au moins deux chambres (18, 18') mutuellement voisines, en particulier selon l'une des revendications 1 à 11, comprenant les étapes suivantes:
a) on fabrique deux couches de recouvrement (20, 20') de la paroi de séparation (14), tournées respectivement vers l'une desdites au moins deux chambres (18, 18') mutuellement voisines, en forme de coques, en particulier en forme de demi-sphères, en forme de coupoles sphériques, en forme de calottes, en forme de calottes ellipsoïdales, coniques, elliptiques, avec une forme de Cassini ou avec d'autres formes de section transversale (20, 20'),
b) on oriente les deux couches de recouvrement (20, 20') de la paroi de séparation (14) l'une par rapport à l'autre et avec leur surface concave (28, 28') vers le haut,
c) on fixe les deux couches de recouvrement (20, 20') de la paroi de séparation (14) l'une par rapport à l'autre,
d) on introduit une couche intermédiaire (22) en mousse de polymère, qui transmet des forces mécaniques et/ou des couples et à effet d'isolation thermique ou de réduction du flux thermique, dans un intervalle (24) entre les deux couches de recouvrement (20, 20') de la paroi de séparation (14) au moyen d'une lance de remplissage ou de dosage (46), et
e) on laisse durcir la couche intermédiaire (22) en mousse de polymère introduite dans l'intervalle (24) entre les deux couches de recouvrement (20, 20') de la paroi de séparation (14).

13. Procédé pour la fabrication d'un récipient destiné à recevoir et à stocker des fluides cryogéniques, en particulier des liquides cryogéniques et des matières visqueuses, comprenant une enveloppe (12) et au moins une paroi de séparation (14) qui subdivise le volume intérieur (16) du récipient (10) en au moins deux chambres (18, 18') mutuellement voisines, en particulier selon l'une des revendications 1 à 11, comprenant les étapes suivantes:
a) on fabrique deux couches de recouvrement (20, 20') de la paroi de séparation (14), tournées respectivement vers l'une desdites au moins deux chambres (18, 18') mutuellement voisines, en forme de coques, en particulier en forme de demi-sphères, en forme de coupoles sphériques, en forme de calottes, en forme de calottes ellipsoïdales, coniques, elliptiques, avec une forme de Cassini ou avec d'autres formes de section transversale (20, 20'),
b) on applique ou on pulvérise une couche intermédiaire (22) en mousse de polymère, qui transmet des forces mécaniques et/ou des couples et à effet d'isolation thermique ou de réduction du flux thermique, sur la surface convexe (28) de la couche de recouvrement inférieure (20) de la paroi de séparation (14) ou la surface concave (28') de la couche de recouvrement supérieure (20') de la paroi de séparation (14),
c) on laisse durcir la couche intermédiaire (22) en mousse de polymère appliquée ou pulvérisée sur la surface convexe (28) de la couche de recouvrement inférieure (20) de la paroi de séparation (14) ou sur la surface concave (28') de la couche de recouvrement supérieure (20'),
d) on oriente et on fixe les deux couches de recouvrement (20, 20') de la paroi de séparation (14) l'une par rapport à l'autre, ou bien
e) on applique une colle (67), en particulier une colle à effet moussant, de préférence une colle pâteuse, un film de colle ou une résine époxy, sur la couche de recouvrement (20, 20') de la paroi de séparation (14) et/ou sur la surface concave (28') de la couche de recouvrement supérieure (20') de la paroi de séparation (14) ou sur la surface convexe (28) de la couche de recouvrement inférieure (20) de la paroi de séparation (14), et
f) on oriente et on fixe les deux couches de recouvrement (20, 20') de la paroi de séparation (14) l'une par rapport à l'autre pour le durcissement de la colle (67).

14. Procédé selon la revendication 13, **caractérisé en ce que** l'on introduit une colle additionnelle (67), en particulier une colle à effet moussant, de préférence une colle pâteuse, un film de colle ou une résine époxy, entre la couche intermédiaire (22) durcie de la paroi de séparation (14) et la surface concave (28') de la couche de recouvrement supérieure (20') de la paroi de séparation (14) ou la surface convexe (28) de la couche de recouvrement inférieure (20) de la paroi de séparation (14), pour la compensation de leurs tolérances.

15. Procédé selon l'une des revendications 12 à 14, **caractérisé en ce que** les deux couches de recouvrement (20, 20') de la paroi de séparation (14) sont fabriquées suivants l'étape a) par moulage-centrifugation.

16. Procédé selon l'une des revendications 12 à 15, **caractérisé en ce que** l'on introduit à titre de couche intermédiaire (22) en mousse polymère une mousse de polymère à pores ouvertes ou fermées dans l'intervalle (24) entre les deux couches de recouvrement (20, 20') de la paroi de séparation (14), ou bien on l'applique ou on la pulvérise sur la surface convexe (28) de la couche de recouvrement inférieure (20) de la paroi de séparation (14) ou sur la surface concave (28') de la couche de recouvrement supérieure (20') de la paroi de séparation (14).

17. Procédé selon l'une des revendications 12 à 16, **caractérisé en ce que** l'on introduit à titre de couche intermédiaire (22) en mousse polymère une mousse de polyuréthane dans l'intervalle (24) entre les deux couches de recouvrement (20, 20') de la paroi de séparation (14), ou bien on l'applique ou on la pulvérise sur la surface convexe (28) de la couche de recouvrement inférieure (20) de la paroi de séparation (14) ou sur la surface concave (28') de la couche de recouvrement supérieure (20') de la paroi de séparation (14).

18. Utilisation d'un récipient selon l'une des revendications précédentes pour recevoir et stocker des liquides et des matières visqueuses, en particulier des fluides cryogéniques, de préférence d'oxygène et d'hydrogène, dans des véhicules, en particulier des véhicules aéronautiques ou des appareils volants de l'aéronautique et de l'aérospatiale, en particulier dans des avions et des engins spatiaux, en particulier dans des véhicules marins, de préférence dans un sous-marin ou un véhicule sur coussin d'air (Hovercraft), ou en particulier dans des véhicules terrestres, de préférence dans une automobile personnelle, des camions ou des mobil-homes, en particulier pour recevoir et stocker des liquides et des matières visqueuses, en particulier des fluides cryogéniques, pour des réservoirs de carburant de fusées ou des réservoirs de satellites.
